# FASCICULE DE BREVET EUROPEEN

(11) **EP 4 352 437 B1**
(45) Date de publication et mention de la délivrance du brevet: **25.02.2026**
(21) Numéro de dépôt: 22733019.8
(22) Date de dépôt: 08.06.2022
(51) Int. Cl.: F27D 19/00, F27D 21/00, F27D 21/02

(54) **PLAQUE INSTRUMENTEE POUR FOUR**
INSTRUMENTIERTE PLATTE FÜR OFEN
INSTRUMENTED PLATE FOR OVEN

(30) Priorité: 09.06.2021 FR 2106067
(43) Date de publication de la demande: 17.04.2024
(73) Titulaire: SAINT-GOBAIN CENTRE DE RECHERCHES ET D'ETUDES EUROPEEN, 92400 Courbevoie (FR)
(72) Inventeur: CABODI, Isabelle Anne, 84306 CAVAILLON CEDEX (FR); CITTI, Olivier, 84306 CAVAILLON CEDEX (FR); HIS, Christian, 84306 CAVAILLON CEDEX (FR); PINSON, Sébastien, 84306 CAVAILLON CEDEX (FR); VILLERMAUX, Franceline Marguerite, 84306 CAVAILLON CEDEX (FR); VUILLERMET, Gaël Loïc Marie, 84306 CAVAILLON CEDEX (FR)
(74) Mandataire: Ipsilon
(86) Numéro de dépôt international: PCT/EP2022/065578
(87) Numéro de publication internationale: WO 2022/258699

(56) Documents cités:
- EP-A1- 0 572 238
- EP-A1- 2 312 250
- EP-A1- 3 320 306
- EP-A2- 1 527 306
- WO-A1-2021/116347
- FR-A1- 3 084 662
- US-A- 5 319 671

## Description

### Domaine technique

L'invention concerne une plaque instrumentée destinée au contrôle d'une partie réfractaire d'un four, en particulier un four métallurgique ou de verrerie, notamment pour déterminer le moment opportun de réparation ou d'arrêt du four.

L'invention concerne aussi un four comportant une partie réfractaire soumise à des températures élevées et une telle plaque instrumentée disposée pour contrôler ladite partie réfractaire, en particulier évaluer l'épaisseur, la température moyenne, ou un état d'endommagement de ladite partie réfractaire.

### Art antérieur

De manière générale, on appelle « four » une installation ou un réacteur comportant une enceinte et un système de chauffage adapté pour instaurer une température supérieure à 800°C dans ladite enceinte.

Un four est en particulier utilisé pour la fabrication de produits fondus, par exemple pour la fabrication des produits métallurgiques ou verriers, mais aussi pour l'incinération de déchets ou la production d'énergie à partir de combustibles. Par exemple, une turbine à gaz réaction est considérée comme un four.

Un four peut consommer du gaz ou d'autres combustibles, ou être muni de résistances électriques, ou être chauffé par induction.

Un four métallurgique peut être une installation dans laquelle un précurseur du métal est réduit afin d'obtenir de la fonte. Un four métallurgique peut être aussi d'un four de d'élaboration de métal ou un four de refusion. Par exemple, un four peut être un haut-fourneau pour élaborer de la fonte à partir de minerai de fer ou pour refondre des cathodes en cuivre élaborées selon un autre processus, par exemple pour produire du câble en cuivre.

Un four verrier peut être une installation dans laquelle est réalisée la fusion et l'affinage d'un mélange vitrifiable, en particulier comprenant des oxydes, des carbonates, des sulfates et des nitrates.

Les parois de l'enceinte d'un four sont classiquement protégées avec un revêtement réfractaire. Le revêtement réfractaire subit des contraintes chimiques et mécaniques différentes selon l'application. Sa composition est adaptée en conséquence. Par exemple, l'intérieur d'un four verrier est classiquement soumis à une température d'environ 1500°C. Le revêtement réfractaire en contact avec le verre en fusion doit en outre résister à l'abrasion par le verre en fusion.

La composition du revêtement réfractaire est en particulier adaptée à l'application visée.

Par exemple, le revêtement réfractaire au contact du verre en fusion ou avec ses vapeurs est classiquement constitué en un produit réfractaire de type Alumine-Zircone-Silice (AZS en abrégé) contenant généralement de 30 à 45% en masse de zircone, en un produit à très haute teneur en zircone (typiquement plus de 85% en masse de zircone), en un produit à haute teneur en alumine (typiquement plus de 90% en masse d'alumine), ou en un produit de zircon, ou en un produit d'oxyde de chrome.

Dans un four de fusion de cathode de cuivre, le revêtement réfractaire est généralement à base de SiC.

Dans un haut-fourneau de fonte, des revêtement réfractaires en SiC, en corindon, en SiAlON, en carbone ou en mullite sont classiquement utilisés, en fonction de la zone du four considérée.

Afin d'optimiser la durée de vie du revêtement réfractaire, des mesures peuvent être effectuées à l'intérieur ou à l'extérieur du four. Ces mesures permettent de planifier avec plus de précision les opérations de réparation, notamment à chaud, ou de remplacement du revêtement réfractaire.

Par exemple, des relevés de températures peuvent être effectués par thermographie infrarouge, mais ceci n'est possible qu'aux endroits accessibles visuellement par une caméra infrarouge, ce qui exclut notamment certaines parties du revêtement du four. Par ailleurs, cette solution ne permet généralement pas un contrôle en continu.

On connaît des dispositifs de mesure autorisant un contrôle continu, de manière non intrusive, c'est-à-dire sans pénétration dans l'enceinte du four. Notamment, WO2020025492A1 décrit, pour mesurer l'usure d'un revêtement réfractaire d'un four verrier, l'utilisation d'un réseau de fibres optiques placé en sandwich entre la face froide des blocs de la paroi latérale de la cuve du four et une couche isolante thermiquement, ou à travers ladite couche isolante. En outre, EP1527306A1 décrit, pour mesurer la température dans un four métallurgique à induction, l'utilisation d'une fibre optique disposée au sein d'un mat fibreux entre un revêtement réfractaire dense et un isolant d'inducteur.

US-A 5319671 décrit un dispositif a mesurer la température d'une paroi réfractaire d'un four métallurgique comprenant un réseau de capteurs électroniques ou de des fibres optiques logée dans une plaque préfabriqué monté dans la paroi de four, la plaque contenant des fibres liées dans une matrice céramiques.

Les solutions de l'art antérieur permettant un contrôle continu posent cependant des problèmes
- de fiabilité, et en particulier de résistance aux hautes températures, notamment lorsque les capteurs comprennent des parties en polymère,
- de perturbation du fonctionnement du four. en particulier de perturbation des échanges thermiques à travers la face froide du revêtement réfractaire,
- de contraintes thermomécaniques résultant de la fixation des capteurs sur le revêtement réfractaire, et
- d'installation et de maintenance, notamment en cas de défaillance du capteur.

Il existe donc un besoin permanent pour une solution facile à mettre en œuvre (installation, maintenance) et permettant de contrôler le revêtement réfractaire d'un four de manière continue et fiable, sans modifier sensiblement le comportement du four, et en particulier sans modifier les contraintes thermomécaniques exercées sur le revêtement réfractaire, ni perturber les transferts thermiques à travers le revêtement réfractaire.

Un but de l'invention est de répondre, au moins partiellement, à ce besoin.

### Résumé de l'invention

L'invention concerne une plaque instrumentée destinée au contrôle d'une partie réfractaire d'un four, et en particulier d'une partie réfractaire dont une face chaude est soumise à une température supérieure à 800°C, voire supérieure à 1000°C, supérieure à 1200°C, supérieure à 1400°C ou supérieure à 1500°C, la plaque instrumentée comportant :
- une plaque de support, de préférence traversée par une pluralité d'orifices, au moins en partie en un matériau constitué de fibres liées entre elles par une matrice céramique, dit « composite à matrice céramique » ou constitué d'un précurseur dudit composite à matrice céramique, de préférence constitué en un composite à matrice céramique ou en un précurseur dudit composite à matrice céramique ;
- un capteur porté par ladite plaque de support.

Comme on le verra plus en détail dans la suite de la description, les inventeurs ont découvert qu'une plaque en un composite à matrice céramique constitue un support de capteur particulièrement bien adapté dans les applications visées. Un composite à matrice céramique résiste bien aux températures élevées et protège efficacement le capteur, notamment des chocs mécaniques. Il est facile à manipuler et à installer.

Par ailleurs, les inventeurs ont découvert que la présence des orifices limite les interactions avec la partie réfractaire. En particulier, la présence de la plaque instrumentée sur la partie réfractaire n'ajoute sensiblement pas de contraintes mécaniques, ni d'isolation thermique. Le four n'a donc pas à être modifié du fait de la mise en place de la plaque instrumentée, notamment lorsque la face de la partie réfractaire sur laquelle la plaque instrumentée est immobilisée est refroidie, par exemple par soufflage d'air.

En outre, les inventeurs ont découvert que la présence des orifices réduit significativement la transmission des contraintes mécaniques au capteur. La fiabilité est donc améliorée.

Enfin, la plaque instrumentée peut être conformée pour épouser cette face de la partie réfractaire, ce qui améliore la précision des mesures effectuées.

La plaque instrumentée peut encore comporter, notamment, une ou plusieurs des caractéristiques optionnelles et préférée suivantes :
- au moins un orifice, de préférence chaque orifice, présente un diamètre équivalent supérieur à 3 mm, et/ou inférieur à 50 mm ;
- le pourcentage d'ajourage, égal au rapport de
   - la surface cumulée des orifices, ou « surface ajourée », sur
   - la surface de la plaque de support, ladite surface incluant la surface ajourée, est supérieur à 5%, de préférence supérieur à 50%, et/ou inférieur à 95% ;
- le capteur est un capteur de mesure d'un signal optique, électrique ou acoustique, de préférence choisi parmi un thermocouple, un capteur piézo-électrique, une jauge de contrainte, une fibre optique, une fibre de propagation d'ondes ultrasonores, et un capteur acoustique ;
- la plaque de support présente une épaisseur comprise entre 1 et 20 mm ;
- les orifices, identiques ou différents, de préférence identiques, sont régulièrement répartis dans au moins une zone « ajourée » de la plaque de support ;
- la plaque de support comporte plusieurs dites zones ajourées et au moins une zone de renfort, ou « zone non ajourée », séparant deux dites zones ajourées, la zone de renfort ayant une largeur supérieure à la plus grande dimension desdits orifices ;
- le composite à matrice céramique ou le précurseur de composite à matrice céramique comporte une pluralité de textiles superposés, un ou plusieurs capteurs, identiques ou différents, par exemple un capteur de température et un capteur de déformation, étant de préférence insérés en sandwich entre deux dit textiles ;
- le capteur est
   - noyé au sein du composite à matrice céramique ou du précurseur dudit composite à matrice céramique, de préférence pris en sandwich entre deux textiles, ou
   - intégré dans l'agencement des fibres du composite à matrice céramique ou du précurseur dudit composite à matrice céramique, par exemple comme fil de trame, fil de chaîne ou fil de tricot, ou
   - logé dans un logement ménagé ou inséré dans le composite à matrice céramique ou dans le précurseur dudit composite à matrice céramique, de préférence dans un logement ménagé sur une grande face de la plaque de support, par exemple dans une poche, une gaine, un tube ouvert à ses deux extrémités, un fourreau ouvert à une de ses extrémités ou une coque, ou
   - fixé sur une grande face de la plaque de support, de préférence au moyen d'un adhésif, d'un ruban, d'une agrafe ou d'un fil réfractaires ;
- les fibres représentent plus de 25% et moins de 70% du volume du composite à matrice céramique ;
- le composite à matrice céramique comporte, en pourcentage massique, plus de 80%, plus de 90%, plus de 95%, voire sensiblement 100% d'un ou plusieurs oxydes ou non oxydes suivants : Al₂O₃, ZrO₂, HfO₂, Cr₂O₃, MgO, CaO, SiO₂, SiC, Si₃N₄, SiAlON, AlN, Si₂ON₂, BN, B₄C, oxycarbure de silicium, MoSi₂, et carbone C ;
- le composite à matrice céramique présente une résistance à l'écrasement en compression supérieure à 10 MPa, et/ou une conductivité thermique entre 20°C et 500°C supérieure à 2,0 W.m⁻¹.K⁻¹.

L'invention concerne aussi un dispositif de mesure comportant une plaque instrumentée selon l'invention et un appareil de mesure en communication avec le capteur de manière à recevoir et interpréter un signal émis par le capteur.

De préférence, le dispositif de mesure utilise le signal qu'il reçoit du capteur pour fournir une information relative à :
- l'épaisseur de la partie réfractaire, en particulier lorsque la plaque instrumentée est fixée sur la face froide d'un bloc et que la face chaude de la partie réfractaire est en contact avec un matériau en fusion, par exemple du verre ou un métal, ou
- la température moyenne de la partie réfractaire, ou
- l'état physique de la partie réfractaire, par exemple la présence d'une transformation de phase ou d'un endommagement de la partie réfractaire, par exemple d'un écaillage, d'une fissure interne, d'une modification d'une phase liée à une infiltration, ou d'une oxydation dans le cas d'une partie réfractaire en un matériau non-oxyde.

L'homme du métier sait choisir les capteurs adaptés aux informations souhaitées.

L'invention concerne encore un four comportant un dispositif de mesure selon l'invention. Le four peut encore comporter, notamment, une ou plusieurs des caractéristiques optionnelles et préférée suivantes :
- le four est choisi parmi un four de fusion de verre, un four métallurgique, un incinérateur, un gazéificateur, une chambre de combustion destinée à produire de l'énergie, et une installation de reformage de gaz destinée à l'industrie chimique ;
- le four contient un matériau en fusion, en particulier un verre ou un métal en fusion, ou un environnement gazeux à une température supérieure à 800°C ;
- le four comporte une partie réfractaire et la plaque instrumentée est disposée en contact avec une face de la partie réfractaire, de préférence de manière à épouser ladite face ;
- la partie réfractaire est une paroi latérale ou une sole d'une cuve du four ou un bloc de ladite paroi latérale ou de ladite sole ;
- la partie réfractaire comporte une face destinée à être à une température supérieure à 800°C, dite « face chaude » et une face écartée de ladite face chaude, dite « face froide », et la plaque instrumentée est disposée en contact avec ladite face froide, la face chaude étant de préférence en contact avec l'intérieur du four ;
- la partie réfractaire est un premier bloc réfractaire adjacent à un deuxième bloc réfractaire, et la plaque instrumentée est disposée entre lesdits premier et deuxième blocs réfractaires, de préférence pincée, ou « comprimée », entre lesdits premier et deuxième blocs réfractaires ;
- le premier bloc réfractaire est plus dense que le deuxième bloc réfractaire, qui peut être en particulier un bloc isolant ;
- la plaque instrumentée s'étend contre une face verticale ou horizontale de la partie réfractaire, notamment, par exemple, si la partie réfractaire est un bloc de gorge ou un bloc de cuve, respectivement ;
- la surface de la plaque instrumentée, qui inclut la surface des orifices, représente plus de 20%, de la surface de la face de la partie réfractaire contre laquelle elle est appliquée ;
- le coefficient d'expansion thermique du composite à matrice céramique de la plaque instrumentée est égal à celui du matériau de la partie réfractaire plus ou moins 20% ;
- la plaque instrumentée est fixée sur la partie réfractaire de manière à ne pas exercer de contraintes thermomécaniques sur la partie réfractaire sous l'effet d'une modification dimensionnelle de la partie réfractaire résultant d'un fonctionnement nominal du four.

### Brève description des figures

D'autres caractéristiques et avantages de l'invention apparaîtront encore à la lecture de la description détaillée qui va suivre et à l'examen du dessin annexé dans lequel :
- [Fig 1] la figure 1 représente schématiquement une demi-coupe d'un exemple de four verrier ;
- [Fig 2] la figure 2 représente schématiquement une demi-coupe d'un exemple de four de métallurgique à induction ;
- [Fig 3] la figure 3 représente schématiquement, vu de face, un premier exemple de plaque instrumentée selon l'invention ;
- [Fig 4] la figure 4 représente schématiquement, vu de face, un deuxième exemple de plaque instrumentée selon l'invention ;
- [Fig 5] la figure 5 représente schématiquement, vu de face, un troisième exemple de plaque instrumentée selon l'invention ;
- [Fig 6] la figure 6 représente schématiquement, vu de face, un quatrième exemple de plaque instrumentée selon l'invention, dans la position de service ;
- [Fig 7] la figure 7 représente schématiquement, vu de face, un cinquième exemple de plaque instrumentée selon l'invention ;
- [Fig 8] la figure 8 représente schématiquement, en coupe transversale, un sixième exemple de plaque instrumentée selon l'invention ;
- [Fig 9] la figure 9 représente schématiquement, en coupe transversale, un autre exemple de plaque instrumentée selon l'invention ;
- [Fig 10] la figure 10 représente schématiquement, en coupe transversale, encore un autre exemple de plaque instrumentée selon l'invention ;
- [Fig 11] la figure 11 illustre la déformabilité en flexion d'une plaque instrumentée dans un mode de réalisation préféré de l'invention ;
- [Fig 12] la figure 12 illustre un positionnement de plaque instrumentée selon l'invention entre des blocs réfractaires d'un four ;
- [Fig 13] la figure 13 représente, en coupe verticale, un mode de réalisation dans lequel deux blocs superposés entre lesquels une plaque instrumentée est insérée.

Des références identiques sont utilisées pour désigner des organes identiques ou similaires.

### Définitions

Par « partie réfractaire », on entend un élément du four en un matériau réfractaire. Une partie réfractaire peut être un bloc, mais aussi un assemblage de blocs, par exemple une paroi latérale d'une cuve, ou une sole, notamment formée par coulage. Une partie réfractaire est classiquement en un matériau fondu ou en un matériau fritté. Classiquement, une couche isolante recouvre la face froide de la partie réfractaire pour limiter les échanges thermiques. La couche isolante peut être absente, par exemple dans une partie du revêtement réfractaire d'un four d'incinération ou dans un haut-fourneau.

Classiquement, lorsque la partie réfractaire comporte une face chaude, son « épaisseur » est sa dimension mesurée selon une direction perpendiculaire à sa face chaude. Par exemple, pour un bloc latéral de cuve en contact avec du verre ou du métal en fusion, l'épaisseur est mesurée suivant une direction sensiblement horizontale dirigée vers le bain de verre ou de métal en fusion. Pour une sole, l'épaisseur est mesurée suivant une direction verticale.

La « face chaude » est la face d'une partie réfractaire qui est exposée à un espace du four qui est à plus de 800°C, par exemple contenant du verre ou du métal en fusion ou destiné à contenir du verre ou du métal en fusion. La face chaude peut être en contact, ou destinée à être en contact avec du verre ou du métal en fusion et/ou avec l'environnement gazeux qui s'étend au-dessus du verre ou du métal en fusion. La face chaude est ainsi la face de la partie réfractaire qui est soumise ou est destinée à être soumise aux températures les plus élevées. L'ensemble des faces chaudes des blocs de la paroi latérale de la cuve de fusion de verre ou de métal peut également, par extension, être qualifiée de « face chaude ». La surface supérieure de la sole peut aussi être qualifiée de « face chaude ».

L'adjectif « chaud » est utilisé à des fins de clarté. Avant que le four ne soit en service, la face « chaude » est la face qui est destinée à être soumise aux températures les plus élevées après la mise en service.

Une « face froide » est une surface de la partie réfractaire qui n'est pas exposée à un espace du four qui est chauffé à plus de 800°C, c'est-à-dire qui est isolée de cet espace par de la matière de la partie réfractaire. La face froide opposée à la face chaude est la face qui est la plus éloignée dudit espace. Classiquement, la face froide opposée à la face chaude est la face qui, en service, est soumise ou qui est destinée à être soumise aux températures les plus faibles. La face froide peut être parallèle à la face chaude.

La « position de service » est la configuration dans laquelle la plaque instrumentée est en appui sur une face, par exemple la face froide, de la partie réfractaire de manière à acquérir une mesure relative à ladite partie réfractaire.

Le terme « plaque » désigne classiquement une pièce comportant deux grandes faces sensiblement parallèles l'une à l'autre et présentant une faible épaisseur au regard de la surface d'une dite grande face, la direction de l'épaisseur de la plaque étant perpendiculaire aux dites grandes faces. Le rapport « épaisseur maximale / surface de la grande face » est de préférence inférieur à 1/500 m⁻¹, de préférence inférieur à 1/1000 m⁻¹, de préférence inférieur à 1/5000 m⁻¹, de préférence inférieur à 1/10000 m⁻¹.

La « surface » d'une plaque est l'aire à l'intérieur du périmètre de la plaque. La surface de la plaque inclut donc la surface définie par la matière de la plaque et la surface des orifices qui traversent la plaque.

L'épaisseur de la plaque instrumentée est sa dimension mesurée perpendiculairement à la grande face de la plaque instrumentée destinée à être positionnée ou positionnée contre la partie réfractaire.

Un orifice qui traverse une plaque est un orifice qui comporte des première et deuxième ouvertures qui débouchent sur les première et deuxième grandes faces de la plaque. Un orifice est de préférence rectiligne et s'étend de préférence perpendiculairement aux grandes faces de la plaque. La « surface » d'un orifice est la surface de son ouverture du côté de la partie réfractaire contre laquelle la plaque est destinée à être placée. La longueur d'un orifice est la plus grande dimension de cette ouverture. Sa largeur est la plus grande dimension de cette ouverture perpendiculairement à la direction de la longueur.

Par « surface ajourée », on entend la surface cumulée de l'ensemble des surfaces des orifices.

Le pourcentage d'ajourage d'une zone ajourée (ou de la plaque instrumentée) est le rapport de la surface ajourée de ladite zone ajourée (ou de ladite plaque instrumentée, respectivement), sur la surface de ladite zone ajourée (ou de ladite plaque instrumentée, respectivement), qui inclut ladite surface ajourée.

Le « diamètre équivalent » d'un orifice est le diamètre d'un disque de même surface que cet orifice.

Par « produit fondu », souvent appelé « électrofondu », on entend un produit obtenu par solidification complète d'une composition à l'état liquide obtenue par fusion d'un mélange de matières premières appropriées dans un four à arc électrique ou par toute autre technique adaptée.

Par « produit fritté », on entend un produit obtenu par mélange de matières premières appropriées puis mise en forme à cru de ce mélange et cuisson de la pièce crue résultante à une température et pendant un temps suffisant pour obtenir le frittage de cette pièce crue, ladite cuisson pouvant être effectuée *in situ* lors de l'utilisation.

Par « Composite à Matrice Céramique », ou « CMC », on entend classiquement un produit composé de fibres liées entre elles par une matrice céramique. Les fibres seront choisies selon l'environnement où doit être placé le composite à matrice céramique, notamment en fonction des conditions de température, de corrosion, de cyclage thermique, de dilatation, et suivant la nature de la partie réfractaire à garnir.

L'agencement des fibres, qui constitue le support fibreux pour la matrice, est choisi en fonction de la forme souhaitée pour le composite à matrice céramique, et de la facilité pour y fixer le capteur. Par exemple, un empilement de tissés ou de nappes de fibres est bien adapté pour des plaques simples, un enroulement filamentaire est bien adapté pour des plaques ayant une géométrie de révolution, un placement filamentaire est bien adapté pour des formes complexes de grandes dimensions.

Un « précurseur de composite à matrice céramique » est un matériau apte à se transformer en ledit composite à matrice céramique sous l'effet d'un chauffage, de préférence à plus de 600°C, de préférence à plus de 700°C, de préférence sous l'effet d'un frittage.

Les fibres sont classiquement sous la forme d'un textile. Le CMC peut être alors qualifié de « textile à matrice céramique ».

Un textile peut être :
- une structure bidimensionnelle organisée de fibres ou de fils, notamment un tricot, une tresse, un tissu, ou
- une structure bidimensionnelle aléatoire de fibres ou de fils, cette structure aléatoire n'étant pas préférée.

Un textile se distingue en particulier d'un mat fibreux, dans lequel l'organisation des fibres ou des fils est aléatoire dans les trois dimensions de l'espace.

Une « fibre » est un filament dont la longueur est supérieure à 5 fois son diamètre équivalent. Le « diamètre » d'une fibre est le diamètre d'un disque de même surface que sa section transversale à mi-longueur.

Un « fil » est un assemblage de fibres qui, en section transversale, comporte plus de 10 et de préférence moins de 500 000 fibres, et dont la longueur est supérieure à 5 fois le diamètre.

Par « céramique », on entend un produit qui n'est ni métallique, ni organique. Dans le cadre de la présente invention, le carbone est considéré comme un produit céramique.

Par « peau », on entend classiquement la région périphérique d'un bloc fondu, constituée à partir de la matière en fusion qui était à moins de 5 millimètres (mm) de la paroi du moule lors de sa solidification.

Par « usinage », on entend une opération de rectification par laquelle la surface d'une pièce réfractaire est usinée afin d'obtenir une géométrie de surface précise.

Dans un souci de clarté, on utilise les formules chimiques des oxydes pour désigner les teneurs de ces oxydes dans une composition. Par exemple, « ZrO₂ », « SiO₂ » ou « Al₂O₃ » désignent les teneurs de ces oxydes et « zircone », « silice » et « alumine » sont utilisés pour désigner des phases de ces oxydes constituées de ZrO₂, SiO₂ et Al₂O₃, respectivement.

Sauf mention contraire, toutes les teneurs en oxydes sont des pourcentages massiques sur la base des oxydes. Une teneur massique d'un oxyde d'un élément métallique se rapporte à la teneur totale de cet élément exprimée sous la forme de l'oxyde le plus stable, selon la convention habituelle de l'industrie.

Un plan transversal d'un objet est un plan perpendiculaire à la direction de la longueur dudit objet.

Par « horizontal » et « vertical », on entend une orientation formant avec un plan parfaitement horizontal et vertical, respectivement, un angle inférieur à 5°, voire inférieur à 2°, voire inférieur à 1°.

« Comporter » ou « comprendre » ou « présenter » doivent être interprétés de manière non limitative.

### Description détaillée

### Four - partie réfractaire

Un four selon l'invention peut être tout four conventionnel, en particulier choisi parmi les fours verriers, les fours métallurgiques, les fours d'usines d'incinération de déchets, les gazéificateurs, les fours de production d'énergie, en particulier les turbines à gaz, et les installations de reformage de gaz destinées à l'industrie chimique.

L'invention concerne de préférence un four verrier. L'invention n'est cependant pas limitée à cette application préférée.

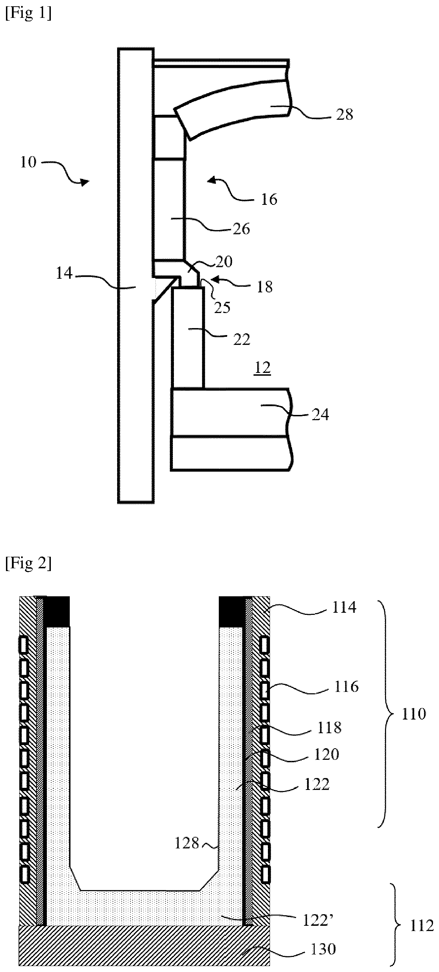

La figure 1 représente schématiquement une demi-coupe transversale d'un four verrier 10. On distingue en particulier une cuve 12, une structure métallique 14 et une superstructure 16.

La cuve 12, destinée à contenir le verre en fusion, comporte une paroi latérale 22 verticale et une sole 24. La paroi latérale 22 est classiquement constituée en blocs de cuve latéraux qui s'étendent sur toute la hauteur de la cuve, jusqu'à un bord supérieur 25.

Une couche isolante thermiquement, non représentée sur la figure 1, est disposée classiquement contre la face froide de la paroi latérale. En particulier, la couche isolante peut ceinturer la paroi latérale de la cuve de fusion de verre du four.

La superstructure 16 comporte classiquement, à sa base, une strate intermédiaire 18 par laquelle elle repose sur la structure métallique, une paroi latérale 26 reposant sur la strate intermédiaire18, et une voûte 28. Des brûleurs, non représentés, sont disposés dans la paroi latérale 26 et fonctionnent en alternance.

La structure métallique 14, classiquement en fonte, entoure extérieurement la paroi latérale 22 de la cuve. Elle supporte le poids de la superstructure 16.

La strate intermédiaire 18 comporte, et de préférence est constituée, de pièces à nez de base 20 *(« tuckstones* » en anglais).

L'enceinte du four est ainsi définie par différentes parties soumises à des contraintes chimiques et mécaniques différentes. L'invention est particulièrement utile pour le suivi d'une partie réfractaire en contact avec du verre en fusion, et en particulier le suivi de l'état de la paroi latérale de la cuve et de la sole.

La partie réfractaire peut être en particulier la voute, la paroi latérale de la superstructure, la strate intermédiaire, la paroi latérale de la cuve, la sole, un bloc de la voute, de la paroi latérale de la superstructure, de la strate intermédiaire, de la paroi latérale de la cuve, ou de la sole.

L'invention concerne aussi un four métallurgique. En particulier, la figure 2 représente schématiquement, en coupe transversale, un creuset d'un four à induction, par exemple pour la refusion de métaux et/ ou leur traitement, par exemple la déphosphoration. Ce creuset comporte une paroi latérale 110 qui s'étend, sensiblement verticalement, à partir d'un fond 112.

La paroi latérale 110 du creuset comporte classiquement, depuis l'extérieur vers l'intérieur du creuset :
- une couche de support 114, sur laquelle est fixé l'inducteur 116 ;
- au moins une couche d'isolant thermique 118 ;
- au moins une couche d'isolant électrique 120 ;
- un revêtement réfractaire 122 définissant la surface intérieure 128 du creuset.

Le fond 112 comporte classiquement, depuis l'extérieur vers l'intérieur du creuset :
- une sole 130, sensiblement horizontale ;
- un revêtement réfractaire 122' définissant la surface intérieure 128 du creuset.

Pendant le fonctionnement, la température peut classiquement dépasser 800°C, voire 1000°C ou même 1200°C, voire 1300°C ou 1400°C, selon le métal considéré-La température est généralement inférieure à 1700°C.

La partie réfractaire peut être en particulier la couche de support 114, la couche d'isolant thermique 118, la couche d'isolant électrique 120, le revêtement réfractaire 122 directement au contact du métal, la sole 130, le revêtement réfractaire 122' ou un ou plusieurs blocs de ces couche d'isolant thermique 118, couche d'isolant électrique 120, revêtement réfractaire 122, sole 130, et revêtement réfractaire 122'.

La partie réfractaire peut être une partie du four qui n'est pas en contact avec l'intérieur de l'enceinte du four.

La partie réfractaire peut être en particulier un bloc ou linteau de gorge (« throat lintel »en anglais), un bloc de cuve (« soldier block » en anglais), une brique ou un bloc de mur ou de côté (« refractory brick » ou « sidewall block » en anglais), un bloc de coin ou d'angle (« corner block » en anglais), une brique à nez (« tuckstone » en anglais), un bloc ou une dalle de sole (« paving tile » ou « pavement » en anglais), une brique ou un sommier de voute ( « crown » en anglais), une brique ou un bloc d'entourage de tuyère ou une brique de trou ou chenal de coulée, un bloc porte électrode (« electrode block » en anglais), un bloc injecteur, une pièce de bec réfractaire de four verrier (« spout-lip » en anglais), un bloc d'injecteur (« injector block » en anglais), une gorge de four de verrerie, une pièce d'un échangeur thermique d'un four, en particulier un tube d'échangeur, une plaque ou une tuile réfractaire, en particulier un tube ou une tuile de revêtement de chaudière, une coquille de protection de tube de réchauffeur d'un incinérateur, une tuile d'un incinérateur, une pièce céramique d'un absorbeur solaire, une tuile ou une pièce de protection d'une chambre de turbine de combustion, en particulier d'une chambre de turbine à gaz, un bloc ou entourage d'une tuyère ou d'un brûleur.

De préférence, la partie réfractaire est rigide, comme un bloc ou un assemblage de blocs, de préférence consolidée, et en particulier frittée ou fondue.

L'invention est particulièrement bien adaptée pour une partie réfractaire comportant une face chaude en contact avec l'intérieur du four, de préférence en contact avec un matériau en fusion, et une face froide opposée à la face chaude. La plaque instrumentée permet en particulier de détecter une infiltration anormale ou trop importante de matériau en fusion dans la partie réfractaire, une telle infiltration n'étant pas toujours détectable avec les outils classiques de supervision de four.

La partie réfractaire peut être en un produit fondu, c'est-à-dire obtenu par fusion d'un mélange réfractaire à une température supérieure à 1000°C, de préférence supérieure à 1500°C, voire supérieure à 1800°C.

La partie réfractaire peut être en un produit fritté, c'est-à-dire obtenu à partir d'un mélange réfractaire mise en forme et fritté, de préférence à une température supérieure à 600°C, de préférence supérieure à 1000°C.

La composition chimique de la partie réfractaire peut être une composition connue pour les revêtements conventionnels, dans l'application visée.

La partie réfractaire est de préférence formée d'un bloc réfractaire ou d'un assemblage de plusieurs blocs réfractaires.

De préférence, le ou lesdits blocs réfractaires sont préfabriqués, c'est à dire obtenus à partir d'un mélange réfractaire, par exemple un béton ou un pisé réfractaire, mis en forme puis soumis à un étuvage, à une température de préférence inférieure à 600°C.

La partie réfractaire est de préférence constituée pour plus de 95%, de préférence pour plus de 97%, de préférence pour plus de 99%, de préférence pour plus de 99,5%, de préférence pour plus de 99,9% de sa masse, d'oxydes et/ou de non-oxydes réfractaires.

Dans un mode de réalisation, la partie réfractaire présente une composition chimique, en pourcentage massique sur la base des oxydes, telle que Al₂O₃ + ZrO₂ + SiO₂ + Cr₂O₃ > 80,0%.

Dans un mode de réalisation, la partie réfractaire, de préférence fondue, présente une composition chimique comportant, en pourcentage massique sur la base des oxydes, plus de 0,5%, voire plus de 1,5%, voire plus de 3,0%, voire plus de 4,0%, voire plus de 5,0%, voire plus de 6,0%, et/ou moins de 10,0%, voire moins de 9,0%, voire moins de 8,0% d'un stabilisant de la zircone, en particulier CaO et/ou Y₂O₃ et/ou MgO et/ou CeO₂, de préférence Y₂O₃ et/ou CaO, de préférence Y₂O₃.

Dans un mode de réalisation, la partie réfractaire est un produit fondu et peut encore comporter une ou plusieurs des caractéristiques optionnelles suivantes :
- au moins une partie, de préférence la totalité des surfaces de la partie réfractaire destinées à être exposées à l'environnement à l'intérieur du four présente une microstructure de peau. En particulier, de préférence au moins une partie, de préférence toute la surface de cuve et/ou la surface de transition supérieure présente(nt) une microstructure de peau ;
- la surface à microstructure de peau présente une densité de cristaux inférieure à 30 fois, voire inférieure à 25 fois, voire inférieure à 20 fois la densité de cristaux mesurée à une profondeur de 4 cm sous ladite surface ;

L'obtention d'une microstructure de peau à la surface d'une pièce fondue, c'est-à-dire en un produit fondu, ne pose pas de difficulté particulière à l'homme de l'art. En particulier, l'homme de l'art sait qu'une microstructure peut être rendue plus fine en surface en augmentant la vitesse de solidification de la matière en fusion.

Lorsque le bain de matière en fusion est coulé dans le moule, les propriétés du moule et la température du moule peuvent notamment être adaptées pour assurer un refroidissement suffisamment rapide pour obtenir une microstructure de peau. Par exemple, lorsque le moule est initialement à température ambiante, il se forme une microstructure de peau à la surface en contact ou à proximité des parois du moule. Si, contrairement à la pratique constante, cette peau n'est pas éliminée lors d'une opération d'usinage, on obtient ainsi une microstructure de peau sur les surfaces de la partie réfractaire qui n'ont pas été usinées.

Un usinage limité (surfaçage) permet cependant de conserver une microstructure de peau.

Bien entendu, la composition, les dimensions, les formes et les microstructures décrites ci-dessus ne sont pas limitatives.

Le fait que la plaque instrumentée épouse la forme de la partie réfractaire contribue avantageusement à la performance optimale du capteur.

### Plaque instrumentée

La plaque instrumentée est un « instrument », sous la forme d'une pièce fine ou d'une couche, destiné à la capture de mesures.

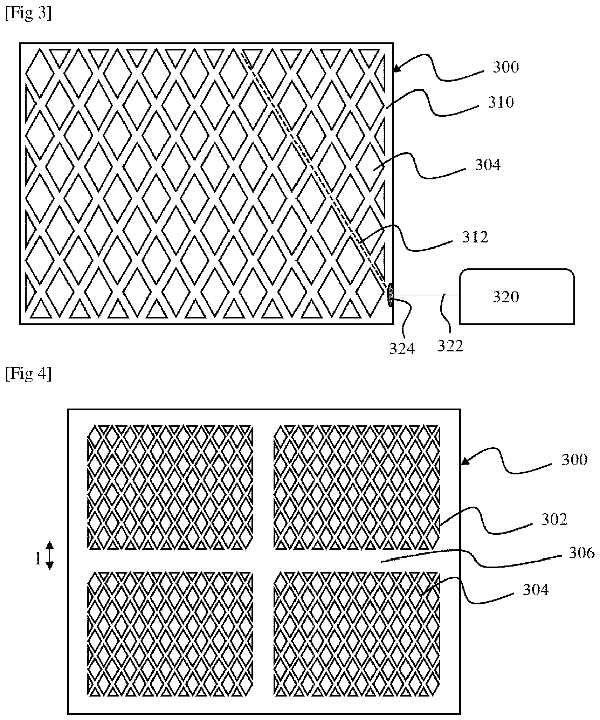

Les figures 3 à 8 représentent des exemples de plaque instrumentée 300.

La plaque instrumentée peut être disposée contre une face quelconque mais est particulièrement utile pour couvrir, au moins partiellement, une face à une température supérieure à 150°C, supérieure à 300°C, supérieure à 400°C, et/ou inférieure à 800°C.

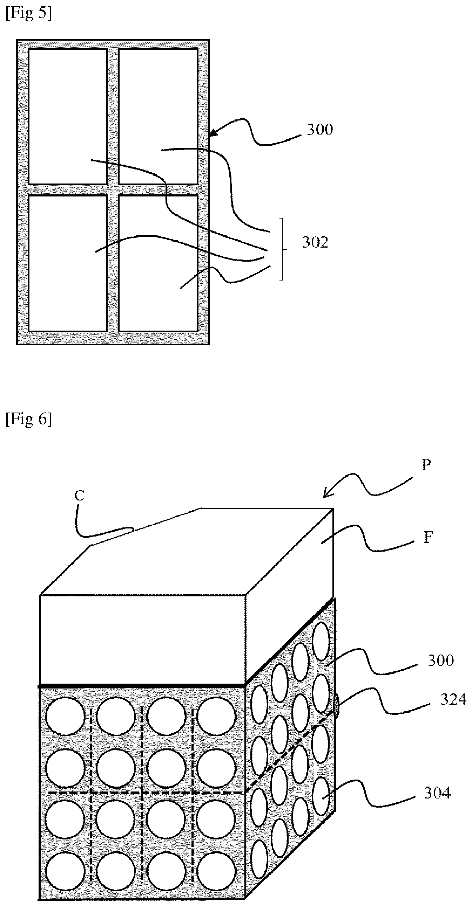

Comme illustré sur la figure 6, dans la position de service, la plaque instrumentée 300 s'étend contre une face de la partie réfractaire P, en l'occurrence la face froide F.

La portion de la face de la partie réfractaire au contact de la plaque instrumentée 300 peut être plane, par exemple définie par un ciel de gorge d'un four verrier ou d'une tuile de turbine à gaz. Elle peut être plane droite ou courbe, par exemple être la face d'une brique à nez dans le cas particulier d'un four verrier. De préférence, elle est plane.

La figure 6 illustre un mode de réalisation dans lequel la face froide F de la partie réfractaire, opposée à la face chaude C, présente la forme générale d'une cornière formée par deux pans qui peuvent en particulier s'étendre perpendiculairement l'un à l'autre.

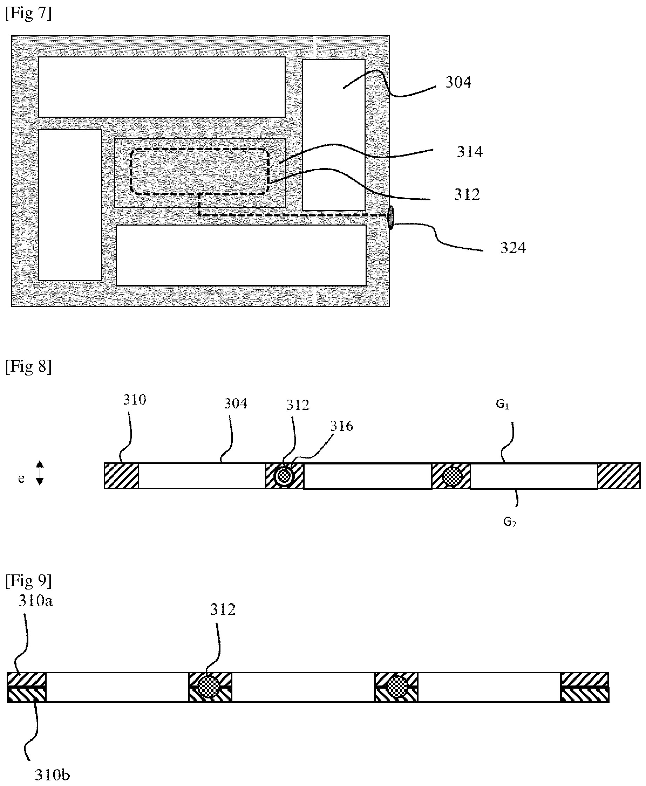

De préférence, la plaque instrumentée 300 présente, entre les grandes faces G₁ et G₂, une épaisseur moyenne e (voir figure 8) de préférence constante, inférieure à 40 mm, de préférence inférieure à 32 mm, de préférence inférieure à 28 mm, de préférence inférieure à 22 mm, de préférence inférieure à 20 mm, de préférence inférieure à 10 mm, voire inférieure à 18 mm ou à 15 mm, et/ou de préférence supérieure à 1 mm, de préférence supérieure à 2 mm, voire supérieure à 3 mm, ou supérieure à 5 mm. Une épaisseur comprise entre 1 et 20 mm, de préférence entre 2 et 10 mm, est préférée, notamment afin de pouvoir s'insérer facilement entre la partie réfractaire et la partie arrière isolante ou l'enveloppe externe du four tout en permettant une tenue mécanique suffisante de la plaque instrumentée 300.

La surface de la plaque instrumentée 300 est de préférence supérieure à 100 cm², de préférence supérieure à 200 cm², de préférence supérieure à 300 cm², de préférence supérieure à 400 cm², et/ou inférieure à 20 000 cm², de préférence inférieure 15 000 cm² voire inférieure à 10 000 cm².

De préférence, la plaque instrumentée 300 s'étend sur plus de 20%, voire plus de 30%, plus de 40%, plus de 50%, plus de 60%, plus de 70%, plus de 80%, plus de 90%, voire 100% de la surface de la face de la partie réfractaire qui la reçoit, en particulier de la face froide de la partie réfractaire.

De préférence, la plaque instrumentée 300 est préfabriquée, c'est-à-dire fabriquée avant d'être appliquée contre la partie réfractaire.

La plaque instrumentée 300 présente de préférence une rigidité suffisante pour être autoportante, c'est-à-dire conserver sa forme lorsqu'elle est manipulée à température ambiante (20°C). Dans la position de service, le capteur est ainsi efficacement maintenu en position.

De préférence, la plaque instrumentée 300 présente une forme complémentaire à celle de la face contre laquelle elle est destinée à être disposée ou contre laquelle elle est disposée.

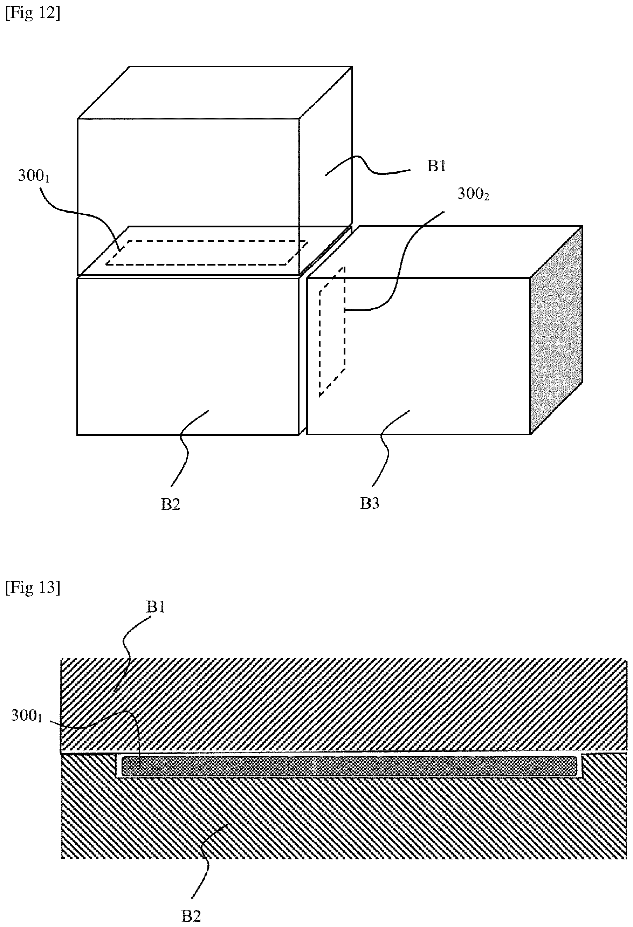

Par exemple, elle peut être disposée, voire fixée dans un renfoncement ménagé sur cette face, par exemple dans le mode de réalisation dans lequel elle est disposée entre deux blocs adjacents, comme illustré sur les figures 12 et 13.

En particulier, la plaque instrumentée 300 peut présenter la forme d'une plaque plane, à plusieurs pans plans, ou cylindrique.

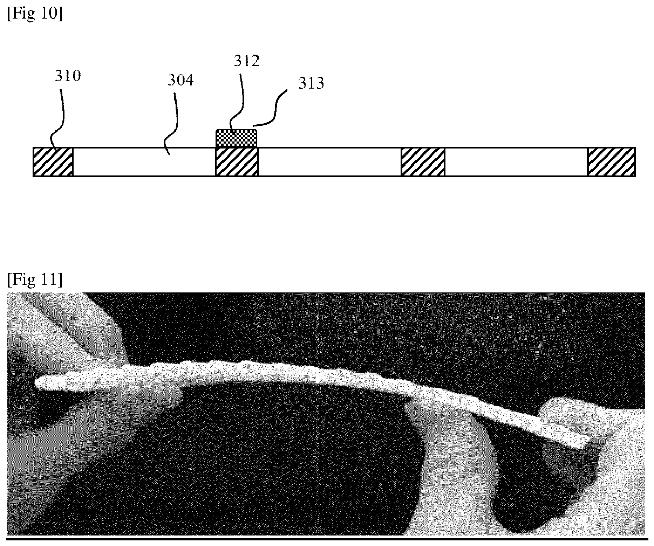

La rigidité de la plaque instrumentée 300 autorise de préférence une flexion à la main, comme représenté sur la figure 11. Avantageusement, elle peut ainsi mieux épouser la forme de la face de la partie réfractaire qui la reçoit.

Dans un mode de réalisation, la plaque instrumentée 300 se présente sous la forme d'un rouleau avant d'être apposée contre la partie réfractaire.

Selon l'invention, la plaque instrumentée 300 comporte une zone ajourée 302, c'est-à-dire traversée par une pluralité d'orifices 304.

L'ajourage limite fortement l'influence de la plaque instrumentée sur le fonctionnement de la partie réfractaire, et en particulier l'impact de la plaque instrumentée sur le transfert thermique. L'ajourage réduit également les contraintes thermomécaniques que la plaque instrumentée exerce sur la partie réfractaire.

Le pourcentage d'ajourage d'une zone ajourée, de préférence d'une zone ajourée quelconque, de préférence de la plaque instrumentée, est de préférence supérieur à 5%, de préférence supérieur à 10%, de préférence supérieur à 15%, voire supérieur à 20%, supérieur à 30%, supérieur à 40%, supérieur à 50%, et/ou inférieur à 95%, de préférence inférieur à 90%.

La figure 5 fournit un exemple de plaque instrumentée dont le pourcentage d'ajourage est très élevé, la plaque instrumentée présentant la forme générale d'une grille.

La forme et la distribution des orifices 304 peut prendre différentes configurations selon les dimensions de la partie réfractaire.

Dans une zone ajourée, de préférence dans chaque zone ajourée 302, les orifices 304 sont de préférence régulièrement répartis.

Dans une zone ajourée 302, de préférence dans chaque zone ajourée, les orifices peuvent présenter des formes et/ou des dimensions identiques ou différentes, de préférence identiques.

Les orifices 304 présentent de préférence une forme ovale, ronde, comme illustré sur la figure 6, ou polygonales, de préférence rectangulaire, carrée ou en losange, comme illustré sur les figures 3 et 4.

De préférence, au moins un orifice 304, de préférence chaque orifice d'une zone ajourée 302, de préférence de chaque zone ajourée, présente un diamètre équivalent et/ou une longueur et/ou une largeur supérieur(e)(s) à 2 mm, supérieur(e)(s) à 3 mm, et/ou inférieur(e)(s) à 300 mm, de préférence inférieur(e)(s) à 200 mm, de préférence inférieur(e)(s) à 150 mm, de préférence inférieur(e)(s) à 100 mm, de préférence inférieur(e)(s) à 50 mm.

De préférence, pour minimiser l'impact sur le transfert thermique, la surface de chaque orifice 304 est comprise entre 4 mm² et 1000 cm².

La section d'un orifice 304, dans un plan de coupe perpendiculaire à la direction de l'épaisseur de la plaque instrumentée, peut être constante ou variable selon le plan de coupe considéré. Une variation de section permet avantageusement de définir localement les propriétés de résistance mécanique, par exemple la façon dont la plaque instrumentée se déforme.

Dans une zone ajourée 302, de préférence dans chaque zone ajourée, les orifices 304 sont de préférence régulièrement répartis. De préférence, chaque orifice est séparé de tout orifice adjacent d'une distance supérieure à 0,5 mm, de préférence supérieure à 1 mm, de préférence supérieure à 2 mm, et/ou inférieure à 50 mm, de préférence inférieure à 40 mm, de préférence inférieure à 30 mm, de préférence inférieure à 20 mm, de préférence inférieure à 15 mm, de préférence inférieure à 10 mm, de préférence inférieure à 5 mm.

Une zone ajourée 302, de préférence chaque zone ajourée, présente de préférence la forme générale d'une grille, d'un grillage ou d'un treillis.

Dans un mode de réalisation, la plaque instrumentée 300 comporte plusieurs zones ajourées 302, de préférence régulièrement réparties sur la plaque instrumentée, séparées par des zones non percées d'orifices, dites « zones de renfort » 306, comme illustré sur la figure 4. Dans un mode de réalisation, l'ensemble des zones de renfort forme un motif régulier, par exemple un cadre ou un quadrillage.

Les zones de renfort contribuent avantageusement à la résistance mécanique de la plaque instrumentée.

La largeur *l* d'une zone de renfort, c'est-à-dire la plus petite distance entre les deux zones ajourées qu'elle sépare, de préférence la largeur de toute zone de renfort, est de préférence
- supérieure à 5 mm, de préférence supérieure à 10 mm, de préférence supérieure à 15 mm et/ou de préférence inférieure à 200 mm, de préférence inférieure à 150 mm, de préférence inférieure à 100 mm, voire inférieure à 80 mm, et/ou
- supérieure à une fois, de préférence supérieure à 2 fois, de préférence supérieure à 3 fois, et/ou de préférence inférieure à 20 fois la plus grande dimension des orifices des zones ajourées qu'elle sépare.

De préférence, l'épaisseur des zones de renfort 306 est identique à celle des zones ajourées.

Le maintien de la plaque instrumentée 300 au contact de la partie réfractaire peut être réalisé par tout moyen connu de l'état de la technique.

La face de la partie réfractaire qui reçoit la plaque instrumentée peut être rainurée ou usinée de manière à ménager un logement ou un renfoncement permettant la fixation de la plaque instrumentée, par exemple par clipsage ou pincement.

De manière générale, la plaque instrumentée est de préférence immobilisée sur la partie réfractaire, de manière à ne pas exercer de contraintes thermomécaniques sur la partie réfractaire sous l'effet d'une modification dimensionnelle de la partie réfractaire lors du fonctionnement normal ou « nominal » du four.

De préférence, elle n'est pas fixée sur toute sa surface, mais par des points de fixation et/ou des lignes de fixation.

Dans un mode de réalisation, la plaque instrumentée 300 est interposée entre deux faces en regard de deux blocs réfractaires adjacents, en particulier des faces verticales ou horizontales. Elle est de préférence comprimée entre ces faces, de sorte qu'il n'est pas nécessaire de la fixer sur lesdites faces.

Dans un mode de réalisation, la plaque instrumentée 300 est immobilisée sur la face qui la reçoit par complémentarité de forme avec ladite face.

La plaque instrumentée 300 peut être également collée sur la partie réfractaire. De préférence, l'adhésif utilisé pour fixer la plaque instrumentée est choisi parmi les mélanges de poudres céramiques et de liants, de préférence appliquée sous une forme liquide.

De préférence, les poudres sont des poudres d'alumine et/ou de silice et/ou de mullite. De préférence, les liants sont choisis parmi la silice colloïdale, le silicate de soude, les résines organiques, les colles organiques et leurs mélanges. L'adhésif utilisé peut également être un adhésif commercial comme les adhésifs Fixwool FX de la société Unifrax.

La plaque instrumentée 300 comporte une plaque de support 310 et un ou plusieurs capteurs 312 portés par la plaque de support 310, de préférence intégrés dans la plaque de support 310, comme illustré sur les figures 8 à 10 par exemple.

Dans un mode de réalisation, la plaque de support 310, voire la plaque instrumentée 300, est fabriquée, en particulier frittée, *in situ,* c'est-à-dire sur la partie réfractaire. La plaque instrumentée 300 peut être alors considérée comme une « couche » revêtant la face de la partie réfractaire qui la reçoit, c'est-à-dire contre laquelle elle s'étend.

### CMC

La plaque de support 310 comporte, de préférence est constituée d'un composite à matrice céramique, ou « CMC », ou d'un précurseur de CMC.

L'homme du métier sait adapter un précurseur de CMC en fonction du CMC souhaité. Seul le CMC est donc décrit en détail ci-après.

La plaque de support 310 définit la forme générale de la plaque instrumentée et sert de support à un ou plusieurs capteurs.

Un CMC s'est avéré particulièrement résistant à la dégradation thermique. Un CMC présente également une bonne résistance à la corrosion par des vapeurs sodiques.

De préférence, le CMC est fritté, classiquement sous air, à pression atmosphérique.

De préférence, le CMC présente une porosité ouverte, mesurée par imbibition, selon le principe de la poussée d'Archimède, supérieure à 25%, de préférence supérieure à 30% et inférieure à 45%, de préférence inférieure à 35%.

Le CMC présente de préférence une masse volumique apparente supérieure à 1,4 g/cm³, voire supérieure à 1,50 g/cm³ et/ou inférieure à 2 g/cm³, de préférence inférieure à 1,9 g/cm³, de préférence inférieure à 1,80 g/cm³.

En particulier lorsque la plaque instrumentée est fixée sur la face froide de la partie réfractaire, par exemple par collage ou par fixation mécanique, par exemple par insertion dans une rainure, il est préférable que le coefficient de dilatation thermique (aussi appelé coefficient d'expansion thermique) du CMC ne diffère pas de celui du matériau de la partie réfractaire de plus de 20%. Le coefficient de dilatation thermique du CMC peut être ajusté par les techniques bien connues de l'homme du métier, notamment en adaptant la composition du CMC. Par exemple, le coefficient de dilatation thermique de la silice entre 20°C et 1000°C est de 0,5.10⁻⁶ m.K⁻¹, de 8.0.10⁻⁶ m.K⁻¹ pour l'alumine, de 4,5.10⁻⁶ m.K⁻¹ pour le SiC, et inférieur à 1.0.10⁻⁶ m.K⁻¹ pour le carbone.

Dans un mode de réalisation, la valeur absolue de la différence entre la conductivité thermique du CMC et la conductivité thermique de la partie réfractaire est inférieure à 10% de la conductivité thermique du CMC, de préférence inférieure à 2,0 W.W¹.K⁻¹, entre 20°C et 500°C.

Dans un mode de réalisation, le CMC présente, entre 20°C et 500°C, une conductivité thermique supérieure à 2,0 W.m⁻¹.K⁻¹, de préférence supérieure à 50 W.m⁻¹.K⁻¹, voire supérieure à 10 W.W⁻¹.K^{-1,}, voire même supérieure à 50 W.W⁻¹.K⁻¹.

De simples essais permettent, pour obtenir un coefficient de dilatation thermique déterminé et/ou une conductivité thermique déterminée, de doser les quantités de fibres de silice, d'alumine, de SiC et de carbone et/ou la quantité de matrice de silice, d'alumine, de SiC et de carbone. Par exemple, la conductivité thermique du CMC peut être adaptée en associant des fibres, par exemple des fibres de SiC ou de graphite conductrices thermiquement, avec une matrice plutôt isolante, par exemple d'alumine, ou en associant une matrice conductrice thermiquement, par exemple de SiC, avec des fibres plutôt isolantes telles que des fibres d'alumine ou de silice.

De préférence, le CMC présente une résistance à la rupture en flexion 3 points, mesurée suivant la norme ASTM C1341-13, supérieure à 3 MPa, de préférence supérieure à 6 MPa, de préférence supérieure à 10 MPa. Avantageusement, la résistance mécanique, notamment sa résistance aux chocs, en est améliorée.

De préférence encore, le CMC, en particulier sous la forme d'un textile à matrice céramique, présente une résistance à l'écrasement en compression très élevée, par exemple mesurée comme décrit ci-dessous, supérieure à 5 MPa, de préférence supérieure à 10 MPa, ce qui améliore la stabilité du capteur. Cette résistance à l'écrasement en compression est notamment supérieure à celle des couches constituées de nappes de fibres *(« insulating mats »* en anglais).

Pour mesurer la résistance à l'écrasement en compression d'une couche d'épaisseur e, on en extrait un échantillon de dimensions égales à 50 x 50 x 10 mm³, la dimension de 10 mm étant selon la direction de l'épaisseur e. Une charge est ensuite appliquée, à température ambiante, sur la totalité de la surface 50 x 50 mm² de l'échantillon, suivant la direction de l'épaisseur, avec une vitesse de déplacement égale à 0,1 mm/min. On augmente la charge jusqu'à obtenir une réduction de moitié (donc de 5 mm) de l'épaisseur de l'échantillon. La résistance à l'écrasement en compression est égale à la charge obtenue exprimée en newton divisée par la surface sur laquelle est appliquée ladite charge (dans le cas présent 25 cm²).

De préférence, le CMC présente une température de fusion ou de sublimation supérieure à 600 °C, de préférence supérieure à 1000°C. Avantageusement, il n'a ainsi pas besoin d'être refroidi en service.

Le CMC est de préférence constitué par un ou plusieurs des oxydes ou non oxydes suivants : Al₂O₃, ZrO₂, HfO₂, Cr₂O₃, MgO, CaO, SiO₂, SiC, Si₃N₄, SiAlON, AlN, Si₂ON₂, BN, B₄C, oxycarbure de silicium, MoSi₂, carbone C, en particulier sous forme de carbone amorphe, de graphite ou de graphène. Il est alors particulièrement résistant à la dégradation thermique.

De préférence, le CMC est constitué pour plus de 90% de sa masse, de préférence pour plus de 95% de sa masse, de préférence pour plus de 98% de sa masse, de préférence pour plus de 99% de sa masse, de préférence pour plus de 99,5% de sa masse, d'oxydes.

En particulier, de préférence, la somme des teneurs en Al₂O₃, SiO₂, ZrO₂, CaO, Na₂O, MgO, K₂O, TiO₂, Fe₂O₃, HfO₂, Cr₂O₃, P₂O₅ et Y₂O₃, ou « Al₂O₃ + SiO₂ + ZrO₂ + CaO + Na₂O + MgO + K₂O + TiO₂ + Fe₂O₃ + HfO₂ + Cr₂O₃ + P₂O₅ + Y₂O₃ », en pourcentage massique sur la base des oxydes du CMC, est de préférence supérieure à 80%, de préférence supérieure à 85%, de préférence supérieure à 90%, voire supérieure à 95%.

Dans un mode de réalisation, le CMC présente une composition chimique, en pourcentage massique sur la base des oxydes, telle que Al₂O₃ + SiO₂ + ZrO₂ + CaO + Na₂O + MgO + K₂O + TiO₂ + Fe₂O₃ + HfO₂ + P₂O₅ + Y₂O₃ > 85%, de préférence supérieure à 90%, voire supérieure à 95%. De préférence, il présente une composition chimique, en pourcentage massique sur la base des oxydes, telle que la teneur totale Al₂O₃ + SiO₂ + ZrO₂ + CaO + Na₂O + MgO + K₂O + TiO₂ + Fe₂O₃ + HfO₂, en pourcentage massique sur la base des oxydes, est supérieure à 80%, de préférence supérieure à 85%, de préférence supérieure à 90%, voire supérieure à 95%. De préférence, il présente une composition chimique, en pourcentage massique sur la base des oxydes, telle que la teneur totale Al₂O₃ + SiO₂ + ZrO₂ + CaO + HfO₂ est supérieure à 80%, de préférence supérieure à 85%, de préférence supérieure à 90%, voire supérieure à 95%.

Dans un mode de réalisation, le CMC présente une composition chimique, en pourcentage massique sur la base des oxydes, telle que Al₂O₃ + SiO₂ > 80%, de préférence supérieure à 85%, de préférence supérieure à 90%, voire supérieure à 95%.

Dans un mode de réalisation, le CMC présente l'analyse chimique suivante, en pourcentage en masse sur la base des oxydes et pour un total de 100% :
- SiO₂ : 47% - 67%,
- Al₂O₃ : 32% - 52%,
- espèces oxydes autres que Al₂O₃ et SiO₂ : < 5%, de préférence < 4%, de préférence < 3%, de préférence < 2%.

### Fibres du CMC

De préférence, le volume des fibres représente plus de 25%, de préférence plus de 30%, de préférence plus de 40%, de préférence plus de 50%, de préférence plus de 60% et/ou moins de 70% du volume de la matière du CMC, c'est-à-dire sans prendre en compte sa porosité, le complément à 100% étant constitué par la matrice céramique liant entre elles lesdites fibres.

Le diamètre des fibres, mesuré à mi-longueur des fibres et en moyenne sur l'ensemble de fibres, est compris entre 3 et 30 micromètres, de préférence entre 5 et 25 micromètres.

Les fibres sont de préférence regroupées sous la forme de fils. Chaque fil comporte de préférence plus de 10, de préférence plus de 50, de manière préférée plus de 100 fibres, de préférence plusieurs centaines à plusieurs milliers de fibres. Les fibres, de préférence les fils, sont de préférence continus, et présentent une longueur supérieure à 50 mm, voire supérieure à 100 mm, voire supérieure à 1 m, supérieure à 10 m, supérieure à 100 m ou même supérieure à 1000 mètres. Dans un mode de réalisation, les fibres, de préférence les fils sont arrangés sous la forme d'un textile, en particulier d'un textile tissé, non tissé, tricoté ou tressé.

Les fibres du CMC comportent, de préférence sont des fibres céramiques. De préférence, les fibres sont choisies parmi les fibres composées pour plus de 95%, de préférence plus de 98%, de préférence plus de 99%, de préférence sensiblement 100% en masse d'alumine, les fibres composées pour plus de 95%, de préférence plus de 98%, de préférence plus de 99%, de préférence sensiblement 100% en masse de silice, de préférence composées pour plus de 95%, de préférence plus de 98%, de préférence plus de 99%, de préférence sensiblement 100% en masse de silice amorphe, les fibres composées pour plus de 95%, de préférence plus de 98%, de préférence plus de 99%, de préférence sensiblement 100% en masse de mullite, et les fibres composées pour plus de 95%, de préférence plus de 98%, de préférence plus de 99%, de préférence sensiblement 100% en masse de verre, de préférence lavé.

Avantageusement, le CMC présente alors une résistance mécanique suffisante pour résister aux chocs, ainsi qu'une rigidité suffisante pour être manipulé aisément et assemblé à la partie réfractaire sans se déformer.

De préférence, les fibres sont en un matériau oxyde comportant de préférence plus de 50%, de préférence plus de 60%, voire plus de 70%, voire plus de 80%, voire plus de 90% en masse d'Al₂O₃ et/ou de SiO₂ et/ou de ZrO₂, en pourcentage en masse sur la base des oxydes.

Les fibres peuvent être également, au moins en partie, en un matériau non-oxyde, par exemple en SiC, en un autre carbure, en un nitrure ou en un oxynitrure.

De préférence, les fibres en un matériau non-oxyde sont choisies parmi les fibres de SiC, par exemple les fibres Nicalon ^{®} grades NL ; Hi ou Hi-S.

### Matrice du CMC

La matrice céramique, ou « phase liante », du CMC peut comporter, en pourcentage massique, plus de 80%, plus de 90%, plus de 95%, voire sensiblement 100% d'un ou plusieurs composé(s) choisi(s) dans le groupe formé par le SiC α ou β, l'oxycarbure de silicium, le carbone C, en particulier sous forme de carbone amorphe, de graphite ou de graphène, Si₃N₄, AlN, les oxynitrures de Silicium dont les SiAlON et Si₂ON₂, le nitrure de bore BN, le carbure de bore B₄C, et le disiliciure de molybdène MoSi₂.

La matrice est de préférence composée, pour plus de 90%, de préférence pour plus de 95%, de préférence pour plus de 99%, d'oxydes, en pourcentage massique. De préférence la matrice du CMC est composée sensiblement entièrement d'oxydes.

Dans un mode de réalisation, la matrice comporte, de préférence est constituée, pour plus de 80%, plus de 90%, plus de 95%, de préférence sensiblement 100% de sa masse, d'un ou plusieurs composé(s) choisi(s) dans le groupe formé par Al₂O₃, ZrO₂, Cr₂O₃, MgO, CaO et SiO₂.

La matrice comprend de préférence Al₂O₃ et/ou SiO₂, de préférence Al₂O₃ et SiO₂. La teneur totale en Al₂O₃ et SiO₂ est de préférence supérieure à 80%, de préférence supérieure à 85%, de préférence supérieure à 90%, de préférence supérieure à 95%, en pourcentage en masse sur la base des oxydes de la matrice. De préférence, la teneur en Al₂O₃ dans la matrice, en pourcentage en masse sur la base des oxydes de la matrice, est supérieure à 60%, de préférence supérieure à 65%, de préférence supérieure à 70% et/ou la teneur en SiO₂ dans la matrice, en pourcentage en masse sur la base des oxydes de la matrice, est supérieure à 15%, de préférence supérieure à 20% et/ou inférieure à 35%, de préférence inférieure à 30%. De préférence, la teneur en oxydes autres que Al₂O₃ et SiO₂ dans la matrice, en pourcentage en masse sur la base des oxydes de la matrice, est inférieure à 3%, de préférence inférieure à 2%, de préférence inférieure à 1%.

Dans un mode de réalisation, la silice de la matrice est amorphe.

### Capteur

La plaque instrumentée comporte un ou plusieurs capteurs 312.

Sur les figures 3 et 6 à 9, les capteurs ont été représentés en traits interrompus. Ils n'ont pas été représentés sur les autres figures.

Le capteur 312 peut être tout capteur connu. Il permet la mesure physique d'un signal optique, électrique ou acoustique. Il est de préférence choisi parmi un thermocouple, un capteur piézo-électrique, une jauge de contrainte, une fibre optique, une fibre de propagation d'ondes ultrasonores, et un capteur acoustique.

De préférence, le capteur est un capteur de température, par exemple un thermocouple ou une fibre optique à réseau de Bragg. Le capteur peut aussi être un capteur de déformation tel que par exemple décrit par WO2017/009256.

Selon un mode de réalisation particulièrement avantageux, le capteur 312 prend la forme d'un fil ou d'un assemblage de fils, fixé sur la plaque de support 310 ou incorporé à la plaque de support 310, de préférence incorporé au CMC de la plaque de support 310.

Selon un premier mode particulier, comme illustré sur la figure 10, le capteur est fixé sur la plaque de support 310 au moyen d'une couche d'interfaçage 313. La couche d'interfaçage peut être, en particulier si la température de la face de la partie réfractaire qui reçoit la plaque instrumentée, en particulier la face froide, est inférieure ou égale à 400°C, une colle comportant un polymère thermodurcissable, thermoplastique ou élastomère réticulable. De préférence, lorsque le polymère est thermodurcissable, son taux de réticulation est supérieur à 75%, voire supérieur à 90%. De préférence, lorsque le polymère est thermoplastique, son taux de cristallinité varie de 0% à 80%. De préférence encore, la colle comporte plus de 50% en masse de polymère(s), par exemple polyuréthane ou époxyde. Si la température de service est supérieure ou égale à 400°C, la couche d'interfaçage est de préférence une colle inorganique, par exemple une colle à base de géopolymère, par exemple comprenant du silicate de soude, ou par exemple une colle à base de Platine ou de Cuivre, ou encore par exemple une colle réfractaire décrite dans l'article R. Luhn, E. Zimmermann und G. Köhler, Jena « Anorganische Hochtemperaturklebstoffe - Anwendungsmôglichkeiten und Grenzen » paru dans « Schweiβen und Schneiden 2000 Vorträge der gleichnamigen Groβen Schweiβtechnischen Tagung in Nürnberg vom 27. bis 29. September 2000 », pages 249 à 252, par exemple une colle céramique Pyro-Putty #653 ou 2400 fournie par Aremco, L'épaisseur de la couche d'interfaçage est de préférence constante, de préférence supérieure à 0,1 mm et/ou inférieure à 2 mm, de préférence inférieure à 1 mm. De manière générale, le comportement d'une colle peut être modifié en ajustant sa composition, par exemple en modifiant sa quantité de matériaux organiques (polymères thermodurcissables, thermoplastiques ou élastomères réticulants), d'agents accélérateurs, de retardants ou de fluidifiants. Il est aussi possible de la charger, en particulier avec une charge en élastomère ou constituée de fibres polymères ou minérales.

Selon un deuxième mode de réalisation, le capteur est attaché ou fixé à la plaque de support 310 au moyen de rubans, d'agrafes ou de fils réfractaires. On peut notamment utiliser du ruban en alumine, ou du fil métallique d'inconel, voire de platine, selon la température maximale atteinte par la face de la partie réfractaire qui reçoit la plaque instrumentée.

Selon un troisième mode de réalisation, le capteur, filaire ou non, est intégré au sein de la plaque de support 310, en particulier au sein du CMC de la plaque de support 310. Comme illustré sur la figure 9, la plaque instrumentée 300 peut par exemple comporter deux couches élémentaires 310a et 310b, par exemple sous la forme de textiles, de préférence de tissés, superposées l'une à l'autre et entre lesquelles le capteur 312 est disposé. Les deux couches élémentaires peuvent être assemblées l'une à l'autre par des agrafes ou lors du frittage pour former le CMC. Elles peuvent en particulier former un logement de réception du capteur (par exemple un thermocouple), par exemple sous la forme d'une poche, d'un tube ouvert à ses deux extrémités, d'un fourreau ouvert à une de ses extrémités ou d'une coque.

La figure 7 illustre un mode de réalisation dans lequel une poche 314 a été créée au centre d'un ensemble d'orifices 304 rectangulaires. Le capteur 312 est disposé à l'intérieur de la poche 314.

Une seule ou, de préférence, les deux couches élémentaires sont des CMC, du type décrit ci-dessus, de préférence des textiles à matrice céramique. De préférence, au moins une, de préférence chacune des deux couches élémentaires présente une épaisseur supérieure à 2 mm, de préférence supérieure à 3 mm, de préférence supérieure à 5 mm et/ou inférieure à 10 mm.

Selon un quatrième mode de réalisation, le capteur est logé dans une gaine réfractaire 316 incorporée dans la plaque de support 310 pendant sa fabrication, ou dans un canal ménagé pendant ou après la fabrication de la plaque de support 310.

Selon un cinquième mode de réalisation, les fibres du CMC sont agencées sous la forme d'un textile, de préférence un tissé, et le capteur, de préférence sous forme filaire, est incorporé au textile, la matrice céramique du CMC étant de préférence formée par frittage lors de la montée en température du four. Ce mode de réalisation nécessite une composition de matrice permettant une consolidation par cuisson à une température inférieure à 800°C.

Selon un sixième mode de réalisation, les fibres du CMC sont agencées sous la forme d'un textile, de préférence un tissé, et le capteur, de préférence sous forme filaire, est incorporé au textile avant enrobage par la matrice et frittage à une température d'au moins 800°C.

En particulier, les fibres du CMC peuvent être agencées sous la forme d'un tricot, d'un tissé ou d'une tresse et le capteur filaire peut être tricoté ou tissé ou tressé lors de la fabrication dudit tricot, dudit tissé ou de ladite tresse.

L'ensemble formé par le tricot, le tissé ou la tresse du CMC d'une part et par le capteur d'autre part est ensuite en partie ou totalement recouvert de la matrice céramique. Avantageusement, la matrice assure ainsi une fonction de protection du capteur. Le capteur est choisi pour résister à l'étape d'enrobage et de cuisson de la matrice céramique. Ce mode de réalisation est particulièrement adapté dans le cas de capteurs filaires ou céramiques.

L'incorporation d'un capteur filaire dans la plaque de support peut être réalisée selon un plan préférentiel, de préférence selon une direction préférentielle ou selon un motif particulier.

La plaque instrumentée peut comprendre plusieurs capteurs, par exemple :
- plusieurs capteurs de température, par exemple deux réseaux différents de fibres optiques ;
- un capteur de température et un capteur de déformation.

Les capteurs peuvent être tous disposés entre les deux mêmes textiles, ou entre des textiles différents.

### Appareil de mesure

L'appareil de mesure 320, qui n'a été représenté que sur la figure 3, est destiné à la commande du capteur 312, en particulier pour recevoir et interpréter le signal émis par le capteur.

L'appareil de mesure 320 peut être connecté au capteur au moyen de câbles 322, par exemple le connectant à des bornes de connexion 324 intégrées dans la plaque instrumentée 300. Par souci de clarté, on considère que le « capteur » 312 comporte alors la pièce qui capte le signal à mesurer, classiquement un transducteur, et les lignes électriques qui relient cette pièce aux bornes de connexion 324.

De préférence, les câbles et les bornes de connexion sont en un métal réfractaire résistant à plus de 400°C, par exemple en Platine. Une colle réfractaire et conductrice à base de platine peut être utilisée pour améliorer les contacts électriques.

Dans un mode de réalisation préféré, l'appareil de mesure 320 n'est pas connecté au capteur 312. Le capteur peut en particulier définir une boucle permettant une mesure sans contact, par induction.

L'appareil de mesure comporte classiquement un processeur, une mémoire informatique et un logiciel configurés pour déterminer, à partir du signal reçu du capteur une propriété relative à l'état de la partie réfractaire, par exemple la température moyenne ou une distribution de température ou une épaisseur résiduelle moyenne ou une distribution d'épaisseur résiduelle.

Tout appareil de mesure conventionnel peut être utilisé. Notamment, le traitement, l'analyse et l'enregistrement de la propriété électrique mesurée par le capteur et de ses variations peuvent mettre en œuvre des moyens d'amplification, de filtrage, de multiplexage et de numérisation connus de l'homme du métier dans le domaine des capteurs.

La communication entre le capteur et l'appareil de mesure peut être réalisée de façon filaire ou sans fil, par exemple par wifi ou Bluetooth^{®}.

De préférence, l'appareil de mesure est programmé pour enregistrer le signal du capteur à intervalle de temps régulier.

### Chauffage - refroidissement

Le four peut comporter un système de refroidissement, par exemple une boite à eau ou à air, disposé de manière à refroidir la face qui reçoit la plaque instrumentée, en particulier la face froide, et/ou la plaque instrumentée. De préférence, la plaque instrumentée est disposée entre la face froide de la partie réfractaire et le système de refroidissement.

De préférence, le système de refroidissement vise principalement à refroidir face froide de la partie réfractaire, le capteur étant protégé par la matrice céramique.

Le four peut encore comporter un dispositif de chauffage, par exemple une résistance chauffante. Un tel chauffage peut être utile pour limiter les chocs thermiques et les gradients thermique dans l'épaisseur de la partie réfractaire.

### Fabrication

La partie réfractaire et la plaque instrumentée peuvent être fabriquées par tous les procédés de fabrication conventionnels.

Le procédé de fabrication de la plaque instrumentée peut en particulier comprendre les étapes suivantes :
- disposition, autour des fibres, d'une barbotine apte à former une matrice céramique après consolidation, par exemple par imprégnation d'un ou plusieurs tissus ou nappes, de préférence tissus ou nappes de fils, de préférence de fils céramiques ;
- si plusieurs tissus ou nappes ont été imprégnés, empilement desdits tissus et/ou nappes, ledit empilement pouvant être réalisé par pressage, ou sous vide,
- consolidation, de préférence par séchage et/ou frittage, de manière à former ladite matrice.

La fabrication de la barbotine est bien connue de l'/homme du métier. La barbotine est classiquement une suspension, par exemple de base aqueuse ou d'un solvant organique, contenant
- des particules céramiques et/ou des précurseurs de particules céramiques, c'est-à-dire des composés se transformant en particules céramiques lors de la fabrication du CMC, et en particulier du chauffage, et
- optionnellement des dispersants, des plastifiants, des lubrifiants, et/ou des liants temporaires.

La composition de la barbotine, la distribution de taille de particules céramiques ou des précurseurs céramiques et la charge minérale de la barbotine est adaptée au type de fibres et à la technique de mise en forme. Par exemple, la barbotine peut être disposée autour ou sur les fibres, notamment en lamination directe, par infusion, injection, infiltration ou déposition, sous pression atmosphérique ou sous plus forte pression ou sous vide, à température ambiante ou à plus haute température.

La consolidation peut éventuellement être réalisée *in situ,* c'est-à-dire lors de la mise en route du four après application sur la partie réfractaire, par exemple et en particulier sur la face froide d'un bloc réfractaire.

Le ou les capteurs peuvent être fixés rigidement au tissu ou à la nappe ou à l'empilement de tissu(s) et/ou de nappe(s) avant ou après ledit séchage et/ou frittage.

Les tissus ou les nappes peuvent être empilés de manière à ce que les fils des différents tissus ou nappes présentent sensiblement tous la même direction, ou des directions différentes, par exemple à 45°, en fonction notamment des propriétés mécaniques recherchées. L'empilement peut également être réalisé sur un support rigide présentant le profil de la surface de la face froide de la partie réfractaire afin d'obtenir une la plaque de support 310 présentant un profil proche de celui de ladite surface.

La surface ajourée peut être obtenue par toute technique connue de l'homme du métier. En particulier, des orifices peuvent être réalisés par forage ou découpage sous jet d'eau, par exemple sur le CMC obtenu après frittage. Les orifices peuvent aussi être réalisés sur l'assemblage de fibres du CMC, en particulier sur un textile, de préférence un tissé, avant enrobage par la matrice.

La forme de la plaque instrumentée est de préférence adaptée pour épouser la face de la partie réfractaire qui le reçoit. Cette forme peut être donnée avant durcissement de la matrice, ou après durcissement de la matrice, par exemple par usinage ou par déformation.

Dans un mode de réalisation, la partie réfractaire et/ou la plaque de support, voire la plaque instrumentée, sont disposées dans la position de service à cru, c'est-à-dire avant d'avoir été frittées. La partie réfractaire est de préférence sous la forme d'un béton. Le frittage de la partie réfractaire et/ou de la plaque de support, voire de la plaque instrumentée, est alors réalisé *in situ* dans le four. De préférence, la matrice céramique du CMC est formée par frittage lors de la montée en température du four.

Dans un mode de réalisation, la plaque instrumentée est fixée sur un bloc réfractaire avant assemblage dudit bloc réfractaire dans le four. L'invention concerne ainsi un bloc réfractaire sur lequel est fixée une plaque instrumentée selon l'invention, avant son assemblage dans le four.

La plaque instrumentée peut être fixée sur une face froide.

Elle peut être également disposée entre des faces, en regard, de blocs réfractaires adjacents. La figure 12 illustre un exemple dans lequel une plaque instrumentée 300₁ selon l'invention est disposée entre des faces horizontales de deux blocs réfractaires superposés B1 et B2, et une plaque instrumentée 300₂ selon l'invention est disposée entre des faces verticales de deux blocs réfractaires côte à côte B2 et B3. Les plaques instrumentées 300₁ et 300₂ peuvent être maintenues en position par la compression exercée par les blocs réfractaires entre lesquels elles s'étendent.

Bien entendu, l'invention n'est pas limitée à la description détaillée qui précède, fournie à des fins illustratives seulement. Il va également de soi que les modes de réalisation décrits ne sont que des exemples et l'on pourrait les modifier, notamment par substitution d'équivalents techniques, sans sortir pour cela du cadre de l'invention.

En particulier, la présence des orifices traversant la plaque de support est particulièrement avantageuse, mais l'invention n'est pas limitée à ce mode de réalisation. En particulier, en complément aux orifices ou alternativement, la plaque de support peut présenter une très faible épaisseur, ce qui avantageusement augmente aussi la déformabilité de la plaque instrumentée et limite l'effet isolant de la plaque instrumentée. L'épaisseur peut être en particulier supérieure à 1 mm et inférieure à 20 mm, de préférence inférieure à 10 mm, ou de préférence inférieure à 5 mm.

Par ailleurs, dans certaines applications, il peut être utile que le CMC participe à l'isolation thermique de la face froide de la partie réfractaire. De préférence, il présente une conductivité thermique de préférence inférieure à 2,0 W.W¹.K⁻¹, de préférence inférieure à 1,8 W.m⁻¹.K⁻¹, de préférence inférieure à 1,5 W.m⁻¹.K⁻¹, de préférence inférieure à 1,3 W.m⁻¹.K⁻¹, de préférence inférieure à 1 W.m⁻¹.K⁻¹, de préférence inférieure à 0,9 W.W¹.K⁻¹, de préférence inférieure à 0,8 W.m⁻¹.K⁻¹, de préférence inférieure à 0,7 W.m⁻¹.K⁻¹, de préférence inférieure à 0,6 W.W¹.K⁻¹, de préférence inférieure à 0,5 W.m⁻¹.K⁻¹ entre 20°C et 500°C, de préférence entre 20°C et 600°C, de préférence entre 20°C et 700°C, de préférence entre 20°C et 800°C, de préférence entre 20°C et 900°C, de préférence entre 20°C et 1000°C.

## Revendications

1. Plaque instrumentée destinée au contrôle d'une partie réfractaire d'un four, la plaque instrumentée comportant :
- une plaque de support (310) traversée par une pluralité d'orifices (304) et au moins en partie en un matériau constitué de fibres liées entre elles par une matrice céramique, dit « composite à matrice céramique », ou constitué d'un précurseur dudit composite à matrice céramique ;
- un capteur (312) porté par ladite plaque de support,
un précurseur de composite à matrice céramique étant un matériau apte à se transformer en ledit composite à matrice céramique sous l'effet d'un chauffage.

2. Plaque instrumentée selon la revendication précédente, dans laquelle chaque dit orifice (304) présente un diamètre équivalent supérieur à 3 mm, et/ou inférieur à 50 mm ; et
le pourcentage d'ajourage, égal au rapport de
- la surface cumulée des orifices (304), ou « surface ajourée », sur
- la surface de la plaque de support, ladite surface incluant la surface ajourée, est supérieur à 5% et inférieur à 95%, et
le capteur (312) est un capteur de mesure d'un signal optique, électrique ou acoustique, et
la plaque de support (310) présente une épaisseur comprise entre 1 et 20 mm.

3. Plaque instrumentée selon la revendication immédiatement précédente, dans laquelle ledit le pourcentage d'ajourage est supérieur à 50%.

4. Plaque instrumentée selon l'une quelconque des revendications précédentes, dans laquelle les orifices (304) sont régulièrement répartis dans au moins une zone « ajourée » (302) de la plaque de support.

5. Plaque instrumentée selon la revendication immédiatement précédente, dans laquelle la plaque de support comporte plusieurs dites zones ajourées (302) et au moins une zone de renfort (306) séparant deux dites zones ajourées, la zone de renfort ayant une largeur (*l*) supérieure à la plus grande dimension desdits orifices.

6. Plaque instrumentée selon l'une quelconque des revendications précédentes, dans laquelle le capteur (312) est
- noyé au sein du composite à matrice céramique ou du précurseur dudit composite à matrice céramique, ou
- intégré dans l'agencement des fibres du composite à matrice céramique ou du précurseur dudit composite à matrice céramique, ou
- logé dans un logement (314, 316) ménagé ou inséré dans le composite à matrice céramique ou le précurseur dudit composite à matrice céramique, ou
- fixé sur une grande face de la plaque de support.

7. Plaque instrumentée selon l'une quelconque des revendications précédentes, dans laquelle le composite à matrice céramique ou le précurseur de composite à matrice céramique comporte une pluralité de textiles (310a,310b) superposés, un ou plusieurs capteurs (312), identiques ou différents, étant insérés entre deux dit textiles.

8. Plaque instrumentée selon l'une quelconque des revendications précédentes, dans laquelle
- les fibres représentant plus de 25% et moins de 70% du volume du composite à matrice céramique, et
- le composite à matrice céramique comporte, en pourcentage massique, plus de 80% d'un ou plusieurs oxydes ou non oxydes suivants : Al₂O₃, ZrO₂, HfO₂, Cr₂O₃, MgO, CaO, SiO₂, SiC, Si₃N₄, SiAlON, AlN, Si₂ON₂, BN, B₄C, oxycarbure de silicium, MoSi₂, et carbone C.

9. Plaque instrumentée selon l'une quelconque des revendications précédentes, dans laquelle le composite à matrice céramique présente une résistance à l'écrasement en compression supérieure à 5 MPa, et/ou une conductivité thermique entre 20°C et 500°C supérieure à 2,0 W.m⁻¹.K⁻¹.

10. Dispositif de mesure comportant une plaque instrumentée (300) selon l'une quelconque des revendications précédentes et un appareil de mesure (320) en communication avec le capteur (312) de manière à recevoir et interpréter un signal émis par le capteur.

11. Four choisi parmi un four de fusion de verre, un four métallurgique, un incinérateur, un gazéificateur, une chambre de combustion destinée à produire de l'énergie, et une installation de reformage de gaz destinée à l'industrie chimique, ledit four comportant :
- une partie réfractaire, et
- un dispositif de mesure selon la revendication immédiatement précédente, la plaque instrumentée (300) du dispositif de mesure étant disposée en contact avec une face de la partie réfractaire.

12. Four selon la revendication immédiatement précédente, dans lequel la partie réfractaire comporte une face destinée à être à une température supérieure à 800°C, dite « face chaude » et une face écartée de ladite face chaude, dite « face froide » (F), la plaque instrumentée étant disposée en contact avec ladite face froide.

13. Four selon l'une quelconque des deux revendications immédiatement précédentes, dans lequel le coefficient d'expansion thermique du composite à matrice céramique est égal à celui du matériau de la partie réfractaire plus ou moins 20%.

14. Four selon l'une quelconque des trois revendications immédiatement précédentes, dans lequel la plaque instrumentée (300) est fixée sur la partie réfractaire de manière à ne pas exercer de contraintes thermomécaniques sur la partie réfractaire sous l'effet d'une modification dimensionnelle de la partie réfractaire résultant d'un fonctionnement nominal du four.

15. Four selon l'une quelconque des quatre revendications immédiatement précédentes, dans lequel la surface de la plaque instrumentée représente plus de 20%, de la surface de la face de la partie réfractaire sur laquelle est appliquée.

16. Four selon l'une quelconque des cinq revendications immédiatement précédentes, dans lequel la partie réfractaire est choisie parmi :
- un bloc ou linteau de gorge,
- un bloc de cuve,
- une brique ou un bloc de mur ou de côté,
- un bloc de coin ou d'angle,
une brique à nez,
- un bloc ou une dalle de sole,
- une brique ou un sommier de voute,
- une brique ou un bloc d'entourage de tuyère,
- une brique de trou ou chenal de coulée,
- un bloc porte électrode,
- un bloc injecteur,
- une pièce de bec réfractaire de four verrier,
- un bloc d'injecteur,
- une gorge de four de verrerie,
- une pièce d'un échangeur thermique du four,
- une plaque ou une tuile réfractaire d'un revêtement de chaudière,
- une coquille de protection de tube de réchauffeur d'un incinérateur,
- une tuile d'un incinérateur,
- une pièce céramique d'un absorbeur solaire,
- une tuile ou une pièce de protection d'une chambre de turbine de combustion,
- un bloc ou un entourage d'une tuyère ou d'un brûleur.

17. Four selon l'une quelconque des six revendications immédiatement précédentes, dans lequel le dispositif de mesure utilise le signal qu'il reçoit du capteur pour fournir une information relative à
- l'épaisseur de la partie réfractaire, ou
- la température moyenne dans le four, ou
- l'état physique de la partie réfractaire.

## Patentansprüche

1. Instrumentierte Platte, die zur Überwachung eines feuerfesten Teils eines Ofens bestimmt ist, wobei die instrumentierte Platte umfasst:
- eine Trägerplatte (310), die von einer Mehrzahl von Öffnungen (304) durchquert wird und mindestens teilweise aus einem Werkstoff ist, der aus Fasern besteht, die durch eine keramische Matrix untereinander verbunden sind, "Keramik-Matrix-Verbundwerkstoff" genannt, oder aus einem Vorläufer des Keramik-Matrix-Verbundwerkstoffs besteht;
- einen Sensor (312), der von der Trägerplatte getragen wird,
wobei der Vorläufer des Keramik-Matrix-Verbundwerkstoffs ein Werkstoff ist, der in der Lage ist, sich unter der Wirkung einer Erwärmung in den Keramik-Matrix-Verbundwerkstoff umzuwandeln.

2. Instrumentierte Platte nach dem vorhergehenden Anspruch, wobei jede Öffnung (304) einen äquivalenten Durchmesser größer als 3 mm und/oder kleiner als 50 mm aufweist; und
der prozentuale Anteil der Durchbrüche, gleich dem Verhältnis
- der kumulierten Oberfläche der Öffnungen (304) oder "durchbrochenen Oberfläche" zu
- der Oberfläche der Trägerplatte, wobei die Oberfläche die durchbrochene Oberfläche beinhaltet, größer als 5 % und kleiner als 95 % ist, und
der Sensor (312) ein Sensor zum Messen eines optischen, elektrischen oder akustischen Signals ist, und
die Trägerplatte (310) eine Dicke zwischen 1 und 20 mm aufweist.

3. Instrumentierte Platte nach dem unmittelbar vorhergehenden Anspruch, wobei der prozentuale Anteil der Durchbrüche größer als 50 % ist.

4. Instrumentierte Platte nach einem der vorhergehenden Ansprüche, wobei die Öffnungen (304) in mindestens einem "durchbrochenen" Bereich (302) der Trägerplatte regelmäßig verteilt sind.

5. Instrumentierte Platte nach dem unmittelbar vorhergehenden Anspruch, wobei die Trägerplatte mehrere durchbrochene Bereiche (302) und mindestens einen Verstärkungsbereich (306), der zwei durchbrochene Bereiche trennt, umfasst, wobei der Verstärkungsbereich eine Breite (1) hat, die größer als die größte Abmessung der Öffnungen ist.

6. Instrumentierte Platte nach einem der vorhergehenden Ansprüche, wobei der Sensor (312)
- in den Keramik-Matrix-Verbundwerkstoff oder den Vorläufer des Keramik-Matrix-Verbundwerkstoffs eingebettet ist, oder
- in die Anordnung der Fasern des Keramik-Matrix-Verbundwerkstoffs oder des Vorläufers des Keramik-Matrix-Verbundwerkstoffs integriert ist, oder
- in einer Aufnahme (314, 316) untergebracht ist, die in dem Keramik-Matrix-Verbundwerkstoff oder dem Vorläufer des Keramik-Matrix-Verbundwerkstoffs ausgebildet oder darin eingefügt ist, oder
- auf einer großen Seite der Trägerplatte befestigt ist.

7. Instrumentierte Platte nach einem der vorhergehenden Ansprüche, wobei der Keramik-Matrix-Verbundwerkstoff oder der Vorläufer des Keramik-Matrix-Verbundwerkstoffs eine Mehrzahl von übereinander liegenden Textilien (310a, 310b) umfasst, wobei ein oder mehrere Sensoren (312), die identisch oder unterschiedlich sind, zwischen zwei der Textilien eingefügt sind.

8. Instrumentierte Platte nach einem der vorhergehenden Ansprüche, wobei
- die Fasern mehr als 25 % und weniger als 70 % des Volumens des Keramik-Matrix-Verbundwerkstoffs ausmachen, und
- der Keramik-Matrix-Verbundwerkstoff in Massenprozent mehr als 80 % von einem oder mehreren der folgenden Oxide oder Nichtoxide umfasst: Al₂O₃, ZrO₂, HfO₂, Cr₂O₃, MgO, CaO, SiO₂, SiC, Si₃N₄, SiAlON, AlN, Si₂ON₂, BN, B₄C, Siliziumoxicarbid, MoSi₂ und Kohlenstoff C.

9. Instrumentierte Platte nach einem der vorhergehenden Ansprüche, wobei der Keramik-Matrix-Verbundwerkstoff eine Druckfestigkeit von mehr als 5 MPa und/oder eine Wärmeleitfähigkeit zwischen 20 °C und 500 °C von mehr als 2,0 W.m⁻¹.K⁻¹ aufweist.

10. Messvorrichtung, umfassend eine instrumentierte Platte (300) nach einem der vorhergehenden Ansprüche und ein Messsgerät (320), das mit dem Sensor (312) in Verbindung steht, so dass es ein von dem Sensor ausgesendetes Signal empfängt und interpretiert.

11. Ofen, der aus einem Glasschmelzofen, einem metallurgischen Ofen, einem Verbrennungsofen, einem Vergasungsofen, einem Brennraum zur Erzeugung von Energie und einer Gasreformierungsanlage für die chemische Industrie ausgewählt ist, wobei der Ofen umfasst:
- einen feuerfesten Teil, und
- eine Messvorrichtung nach dem unmittelbar vorhergehenden Anspruch, wobei die instrumentierte Platte (300) der Messvorrichtung in Kontakt mit einer Seite des feuerfesten Teils angeordnet ist.

12. Ofen nach dem unmittelbar vorhergehenden Anspruch, wobei der feuerfeste Teil eine Seite, die für eine Temperatur über 800 °C bestimmt ist, "Heißseite" genannt, und eine von der Heißseite beabstandete Seite, "Kaltseite" (F) genannt, umfasst, wobei die instrumentierte Platte in Kontakt mit der Kaltseite angeordnet ist.

13. Ofen nach einem der beiden unmittelbar vorhergehenden Ansprüche, wobei der Wärmeausdehnungskoeffizient des Keramik-Matrix-Verbundwerkstoffs gleich dem des Werkstoffs des feuerfesten Teils plus oder minus 20 % ist.

14. Ofen nach einem der drei unmittelbar vorhergehenden Ansprüche, wobei die instrumentierte Platte (300) an dem feuerfesten Teil so befestigt ist, dass keine thermomechanischen Spannungen auf den feuerfesten Teil unter der Wirkung einer aus dem Nennbetrieb des Ofens resultierenden maßlichen Änderung des feuerfesten Teils ausgeübt werden.

15. Ofen nach einem der vier unmittelbar vorhergehenden Ansprüche, wobei die Oberfläche der instrumentierten Platte mehr als 20 % der Oberfläche der Seite des feuerfesten Teils, an dem sie befestigt ist, ausmacht.

16. Ofen nach einem der fünf unmittelbar vorhergehenden Ansprüche, wobei der feuerfeste Teil ausgewählt ist aus:
- einem Rillenblock oder -sturz,
- einem Wannenblock,
- einem Wand- oder Seitenteilstein oder -block,
- einem Querwölber- oder Eckblock,
einem Nasenstein,
- einem Sohlenblock oder einer Sohlenplatte,
- einem Gewölbestein oder einem Bogenanfänger,
- einem Düsenumwehrungsstein oder -block,
- einem Loch- oder Gießkanalstein,
- einem Elektrodenhaltestein,
- einem Einspritzblock,
- einem feuerfesten Ausgussteil eines Glasofens,
- einem Einspritzerblock,
- einem Glasofendurchlass,
- einem Teil eines Wärmetauschers des Ofens,
- einer feuerfesten Platte oder Kachel einer Kesselauskleidung,
- einer Schutzschale eines Rohrs eines Erhitzers einer Verbrennungsanlage;
- einer Kachel einer Verbrennungsanlage,
- einem keramischen Teil eines Solarabsorbers,
- einer Kachel oder einem Schutzteil einer Turbinenbrennkammer,
- einem Block oder einer Umwehrung einer Düse oder eines Brenners.

17. Ofen nach einem der sechs unmittelbar vorhergehenden Ansprüche, wobei die Messvorrichtung das Signal, das sie von dem Sensor empfängt, verwendet, um eine Information bereitzustellen bezüglich
- der Dicke des feuerfesten Teils, oder
- der mittleren Temperatur im Ofen, oder
- des physischen Zustands des feuerfesten Teils.

## Claims

1. Instrumented plate intended for the monitoring of a refractory part of a furnace, the instrumented plate comprising:
- a support plate (310) through which a plurality of orifices (304) pass and which is at least partially made of a material consisting of fibres interconnected by a ceramic matrix, referred to as "ceramic-matrix composite", or consisting of a precursor of said ceramic-matrix composite;
- a sensor (312) borne by said support plate,
a ceramic-matrix composite precursor being a material which is capable of transforming into said ceramic-matrix composite under the effect of heating.

2. Instrumented plate according to the preceding claim, wherein each of said orifices (304) has an equivalent diameter greater than 3 mm and/or less than 50 mm; and the percentage of perforation, equal to the ratio of
- the cumulative surface area of the orifices (304), or "perforated surface area", to
- the surface area of the support plate, said surface area including the perforated surface area, is greater than 5% and less than 95%, and
the sensor (312) is a sensor for measuring an optical, electrical or acoustic signal, and
the support plate (310) has a thickness of between 1 and 20 mm.

3. Instrumented plate according to the immediately preceding claim, wherein said percentage of perforation is greater than 50%.

4. Instrumented plate according to any one of the preceding claims, wherein the orifices (304) are evenly distributed in at least one "perforated" zone (302) of the support plate.

5. Instrumented plate according to the immediately preceding claim, wherein the support plate has several of said perforated zones (302) and at least one reinforcing zone (306) separating two of said perforated zones, the reinforcing zone having a width (1) greater than the largest dimension of said orifices.

6. Instrumented plate according to any one of the preceding claims, wherein the sensor (312) is
- embedded within the ceramic-matrix composite or the precursor of said ceramic-matrix composite, or
- integrated in the arrangement of fibres of the ceramic-matrix composite or of the precursor of said ceramic-matrix composite, or
- accommodated in a recess (314, 316) formed or inserted in the ceramic-matrix composite or the precursor of said ceramic-matrix composite, or
- attached to a large face of the support plate.

7. Instrumented plate according to any one of the preceding claims, wherein the ceramic-matrix composite or the ceramic-matrix composite precursor comprises a plurality of superposed textiles (310a, 310b), one or more identical or different sensors (312) being inserted between two of said textiles.

8. Instrumented plate according to any one of the preceding claims, wherein
- the fibres represent more than 25% and less than 70% of the volume of the ceramic-matrix composite, and
- the ceramic-matrix composite comprises, in percentage by mass, more than 80% of one or more of the following oxides or non-oxides: Al₂O₃, ZrO₂, HfO₂, Cr₂O₃, MgO, CaO, SiO₂, SiC, Si₃N₄, SiAlON, AlN, Si₂ON₂, BN, B₄C, silicon oxycarbide, MoSi₂, and carbon C.

9. Instrumented plate according to any one of the preceding claims, wherein the ceramic-matrix composite has a resistance to compressive crushing of greater than 5 MPa, and/or a thermal conductivity between 20°C and 500°C of greater than 2.0 W.m⁻¹.K⁻¹.

10. Measuring device comprising an instrumented plate (300) according to any one of the preceding claims and a measuring appliance (320) communicating with the sensor (312) so as to receive and interpret a signal emitted by the sensor.

11. Furnace selected from a glass melting furnace, a metallurgical furnace, an incinerator, a gasifier, a combustion chamber intended for energy generation, and a gas reforming installation intended for the chemical industry, said furnace comprising:
- a refractory part, and
- a measuring device according to the immediately preceding claim, the instrumented plate (300) of the measuring device being disposed in contact with one face of the refractory part.

12. Furnace according to the immediately preceding claim, wherein the refractory part has a face intended to be at a temperature greater than 800°C, referred to as "hot face", and a face facing away from said hot face, referred to as "cold face" (F), the instrumented plate being disposed in contact with said cold face.

13. Furnace according to either one of the two immediately preceding claims, wherein the coefficient of thermal expansion of the ceramic-matrix composite is equal to that of the material of the refractory part plus or minus 20%.

14. Furnace according to any one of the three immediately preceding claims, wherein the instrumented plate (300) is attached to the refractory part so as to not exert thermomechanical stresses on the refractory part under the effect of a dimensional modification of the refractory part resulting from nominal operation of the furnace.

15. Furnace according to any one of the four immediately preceding claims, wherein the surface area of the instrumented plate represents more than 20% of the surface area of the face of the refractory part to which it is applied.

16. Furnace according to any one of the five immediately preceding claims, wherein the refractory part is selected from the following:
- a throat lintel or block,
- a soldier block,
- a refractory brick or sidewall block,
- a corner block,
- a tuckstone,
- a paving tile or pavement,
- a crown brick or beam,
- a tuyere surround brick or block,
- a brick for a tapping hole or spout,
- an electrode block,
- an injector block,
- a refractory spout-lip for a glass furnace,
- a block for an injector,
- a glass furnace throat,
- a component for a heat exchanger of the furnace,
- a refractory tile or plate for a boiler lining,
- a protective shell for a heater tube for an incinerator,
- a tile of an incinerator,
- a ceramic component for a solar absorber,
- a protective component or tile for a turbine combustion chamber,
- a block or surround for a tuyere or a burner.

17. Furnace according to any one of the six immediately preceding claims, wherein the measuring device uses the signal it receives from the sensor to provide information relating to
- the thickness of the refractory part, or
- the mean temperature in the furnace, or
- the physical state of the refractory part.
